(19) Europäisches Patentamt
European Patent Office
Office européen des brevets

(11) EP 1 532 187 B1

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(21) Anmeldenummer: **03750407.3**

(22) Anmeldetag: **01.08.2003**

(51) Int Cl.:
***C08G 18/46** (2006.01)* ***C08G 63/685** (2006.01)*
***C09D 175/12** (2006.01)* ***C08G 73/16** (2006.01)*

(86) Internationale Anmeldenummer:
**PCT/EP2003/008528**

(87) Internationale Veröffentlichungsnummer:
**WO 2004/022622 (18.03.2004 Gazette 2004/12)**

(54) **WASSERVERDÜNNBARE POLYESTER MIT CYCLISCHER IMID- UND ISOCYANURATSTRUKTUR**

WATER-DILUTABLE POLYESTERS WITH A CYCLIC IMIDE AND ISOCYANURATE STRUCTURE

POLYESTERS DILUABLES DANS L'EAU A STRUCTURE IMIDE ET ISOCYANURATE CYCLIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **14.08.2002 DE 10237195**

(43) Veröffentlichungstag der Anmeldung:
**25.05.2005 Patentblatt 2005/21**

(73) Patentinhaber: **Bayer MaterialScience AG
51368 Leverkusen (DE)**

(72) Erfinder:
- **WAMPRECHT, Christian
41472 Neuss (DE)**
- **PIRES, Raul
50670 Köln (DE)**
- **FREUDENBERG, Ulrich
50259 Pulheim (DE)**
- **REYER, Robert
47918 Tönisvorst (DE)**

(56) Entgegenhaltungen:
**DE-A- 3 213 257** **FR-A- 2 672 607**
**US-A- 3 426 098**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 532 187 B1

## Beschreibung

Die vorliegende Erfindung betrifft neue wasserverdünnbare Polyesterpolyole mit cyclischer Imid- und Isocyanuratstruktur und deren Verwendung in Beschichtungsmitteln.

Aus dem Stand der Technik ist bekannt, dass Polyisocyanate mit freien Isocyanatgruppen und bestimmten ausgewählten Eigenschaften, wie z.B. Viskosität oder Hydrophilie in Kombination mit unterschiedlichen hydroxyfunktionellen Bindemitteln, beispielsweise Polyester, Polyacrylate oder Polyurethane in wässrigem Medium als Vernetzer unter verschiedenen Bedingungen eingesetzt werden können. Solche Systeme sind beispielsweise bekannt aus der EP-A 0 358 979, EP-A 0 469 389, EP-A 0 496 205, EP-A 0 537 568, EP-A 0 583 728, EP-A 0 654 053 und der DE-A 41 35 571.

Aus dem Stand der Technik sind ferner Wasserklarlacke auf der Basis spezieller Acrylatdispersionen und Aminoharzen, gegebenenfalls in Kombination mit verkappten Polyisocyanaten, bekannt. Beispiele hierfür sind in der EP-A 0 365 775, EP-A 0 363 723, EP-A 0 521 926 und EP-A 0 521 927 offenbart. Die dort aufgezählten Lacke sind jedoch für niedrige Einbrenntemperaturen nicht geeignet. Insbesondere ist eine Verarbeitung auf Kunststoffteilen nicht möglich.

Die DE-A 195 38 061 beschreibt wasserverdünnbare Polyester mit engen Zusammensetzungsverhältnissen, welche sowohl aromatische als auch cycloaliphatische säuregruppenhaltige Bausteine enthalten. Die beschriebenen Polyester werden vorzugsweise in Automobilklarlacken für die Automobilserienlackierung eingesetzt. Nachteilig ist bei diesen Polyestern die nicht ausreichende Hydrolysebeständigkeit.

In der DE-A 42 26 242 werden Zweikomponenten-Polyurethanlacke beschrieben, die als hydroxyfunktionelles Polymer wasserverdünnbare Polyesterpolyole, in welchen als Polyolbaustein Trishydroxyethylisocyanurat eingesetzt wird, enthalten.

Polymere mit cyclischen Imidstrukturen, z.B. Polyamidimide aus Diaminen bzw. Diisocyanaten, Tricarbonsäureanhydriden und ε-Caprolactam, werden häufig für hitzebeständige Beschichtungen bei der Drahtlackierung eingesetzt, wie in der DE-A 38 17 614 oder DE-A 33 32 031 offenbart. Auch Kombinationen mit modifizierten Polyestern sind beschrieben, z.B. in der DE-A 32 13 257. Diese Polymere sind jedoch nicht wasserverdünnbar.

In US-A-3 426 098 werden Polyestern mit cyclischen Imidstrukturen aus Trimellitsäureanhydrid und Diaminen und Isocyanuratstrukturen beschrieben.

Die Aufgabe der vorliegenden Erfindung bestand in der Bereitstellung von neuen Polyestern, die sich zur Herstellung von wässrigen bzw. wasserverdünnbaren hydrolysebeständigen Polyesterdispersionen oder -lösungen eignen. Die Polyesterdispersionen sollten ferner zur Herstellung hochwertiger wässriger Zweikomponenten-Polyurethanlacke einsetzbar sein und die gestellten Anforderungen an die Lackeigenschaften, z.B. Trocknung, Oberflächengüte wie Härte, Glanz, Verlauf, Glätte, Fülle und Effekt, Polierfähigkeit und Beständigkeit gegen Wasser, chemische Agenzien oder atmosphärische Einflüsse, Bewitterung und mechanische Einflüsse erfüllen. Weiterhin sollten die erfindungsgemäßen Polyester auch eine solche Elastizität besitzen, dass sie sich zur Beschichtung von Kunststoffsubstraten eignen.

Diese Aufgabe konnte durch die Bereitstellung von Polyestern mit cyclischer Imid- und Isocyanuratstruktur gelöst werden.

Gegenstand der Erfindung sind somit Polyesterpolyole,

- die Struktureinheiten der allgemeinen Formel (I) enthalten,

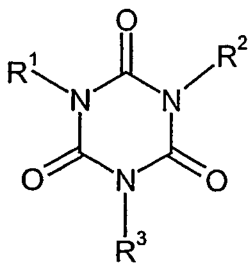

(I)

in welcher

$R^1$, $R^2$, $R^3$ unabhängig voneinander gleich oder verschieden sind und für organische gegebenenfalls Heteroatom-enthaltende Reste stehen, die ein oder mehrere der folgenden Struktureinheiten aufweisen:

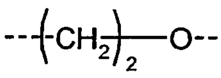 , 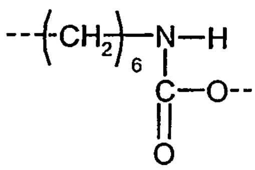 , 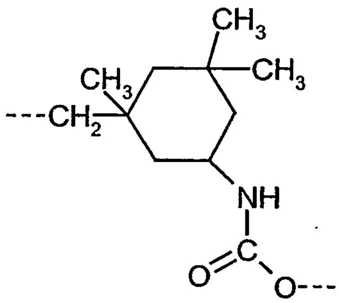 ,

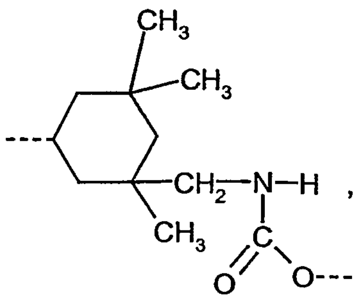 , 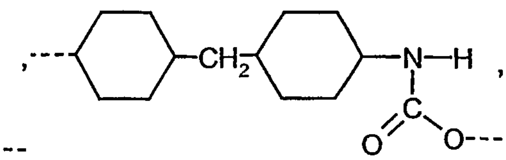 , 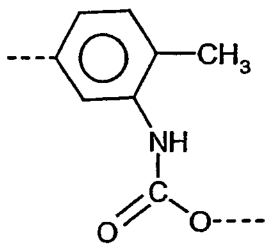

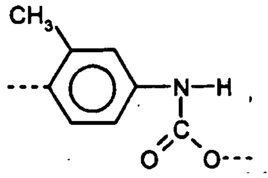 , 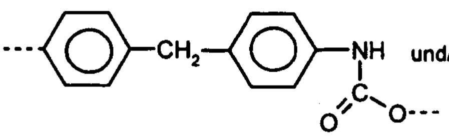 und/oder 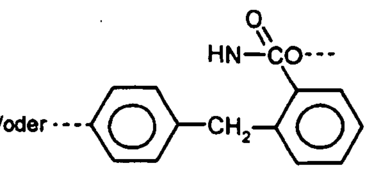

und wenigstens eine Struktureinheit ausgewählt aus der Gruppe bestehend aus Struktureinheiten der allgemeinen Formel (II),

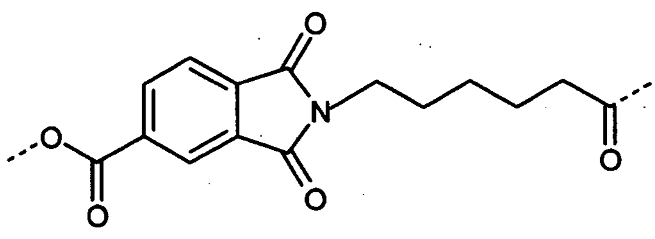 (II)

- und Struktureinheiten der allgemeinen Formel (III),

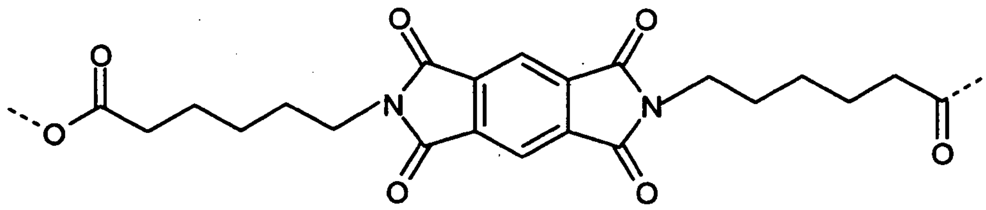 (III).

enthalten.

Ebenfalls Gegenstand der vorliegenden Erfindung sind Polyesterpolyole,

- die Struktureinheiten der allgemeinen Formel (I) enthalten,

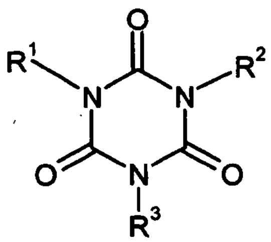 (I)

in welcher

$R^1$, $R^2$, $R^3$ unabhängig voneinander gleich oder verschieden sind und für organische gegebenenfalls Heteroatom-enthaltende Reste stehen, die ein oder mehrere der folgenden Struktureinheiten aufweisen:

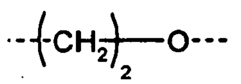 , 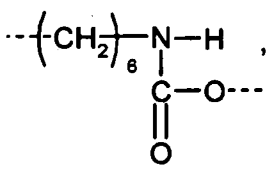 , 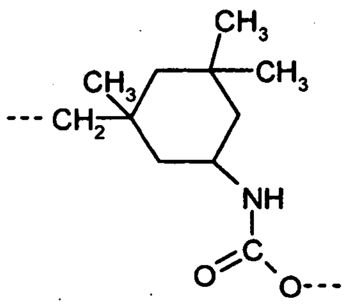 ,

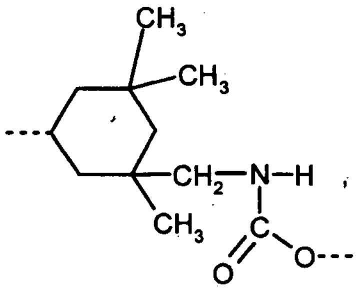 , 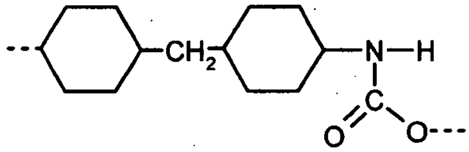 , 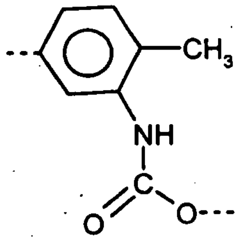

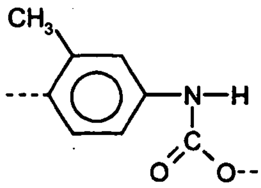 , 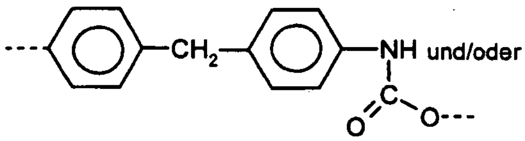 und/oder 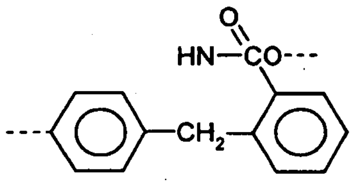

und die als Endgruppen
wenigstens eine Struktureinheit ausgewählt aus der Gruppe bestehend aus

- Struktureinheiten der allgemeinen Formel (IV),

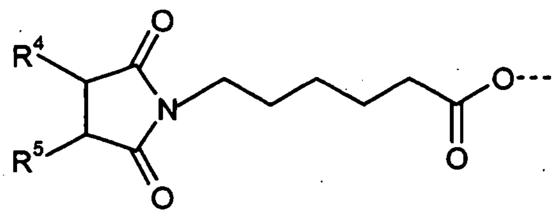 (IV)

- und Struktureinheiten der allgemeinen Formel (V)

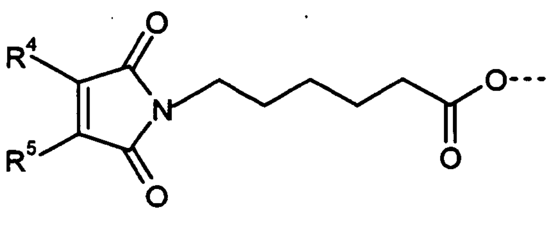 (V)

enthalten,
in welchen
$R^4$, $R^5$ unabhängig voneinander gleich oder verschieden sind und

- für Wasserstoff, Halogen, gegebenenfalls substituierte $C_1$-$C_{18}$-Alkyl-, $C_2$-$C_{18}$-Alkenyl, $C_2$-$C_{18}$-Alkinyl, $C_3$-$C_{12}$-Cycloalkyl-, $C_3$-$C_{12}$-Heterocycloalkyl-, $C_6$-$C_{24}$-Aryl-, $C_6$-$C_{24}$-Heteroaryl-, $C_1$-$C_{18}$-Alkoxy-, $C_1$-$C_{18}$-Alkylthio-, $C_1$-$C_{18}$-Al-

kylamino-Reste stehen
oder

- mit dem verbindenden C-Atom des $C_4$N-Fünfringes ein $C_3$-$C_{12}$-Cycloalkyl- oder $C_2$-$C_{13}$-Heterocycloalkylrest bilden, der gegebenenfalls Sauerstoff, Stickstoff und/oder Schwefel enthält
oder

- beide zusammen mit den verbindenden C-Atomen des $C_4$N-Fünfringes ein annelliertes cyclisches oder polycyclisches Ringsystem bilden, welches gesättigt, ungesättigt, teilweise oder vollständig aromatisch ist, gegebenenfalls substituiert ist und gegebenenfalls Sauerstoff, Stickstoff und/oder Schwefel enthält.

Die erfindungsgemäßen Polyesterpolyole weisen freie Hydroxyl- und Carboxylgruppen auf.

Die erfindungsgemäßen Polyesterpolyole weisen Hydroxylzahlen von 10 bis 400 mg KOH/g, bevorzugt von 15 bis 350 mg KOH/g und besonders bevorzugt von 20 bis 300 mg KOH/g, sowie Säurezahlen von 5 bis 100 mg KOH/g, bevorzugt von 10 bis 80 mg KOH/g und besonders bevorzugt von 20 bis 60 mg KOH/g auf.

Geeignete Aufbaukomponenten für die erfindungsgemäßen Polyester sind Säurekomponenten (A), cyclische Lactame (B), Alkoholkomponenten (C) und Isocyanuratkomponenten (D).

Als Säurekomponenten sind beispielsweise difunktionelle Carbonsäuren oder deren Derivate (A1) geeignet, wie aliphatische, cycloaliphatische oder aromatische difunktionelle Carbonsäuren oder deren Anhydride. Aliphatische difunktionelle Carbonsäuren sind z.B. aliphatische gesättigte Dicarbonsäuren wie Oxalsäure, Malonsäure, Dimethylmalonsäure, Bernsteinsäure, Adipinsäure, Glutarsäure, Azelainsäure, Pimelinsäure, Korksäure, Sebacinsäure oder die möglichen Anhydride dieser Säuren sowie ungesättigte Dicarbonsäuren wie z.B. Fumarsäure, Maleinsäure, Itaconsäure, Zitronensäure oder die möglichen Anhydride dieser Säuren. Bevorzugt sind Adipinsäure und Maleinsäureanhydrid. Cycloaliphatische difunktionelle Carbonsäuren sind z.B. Cyclopentandicarbonsäure, 1,3-, 1,4-Cyclohexandicarbonsäure, 2,5-Norbornendicarbonsäure, Endoethylencyclohexandicarbonsäure und Methyltetrahydrophthalsäure, Tetrahydrophthalsäure, Hexahydrophthalsäure oder die möglichen Anhydride dieser Säuren. Bevorzugt sind 1,4-Cyclohexandicarbonsäure, Tetrahydrophthalsäureanhydrid und Hexahydrophthalsäureanhydrid. Als aromatische difunktionelle Carbonsäuren sind z.B. Terephthalsäure, Isophthalsäure, Phthalsäure, Naphthalendicarbonsäure, Biphenyldicarbonsäure oder die möglichen Anhydride dieser Säuren geeignet. Es ist ebenfalls möglich, Gemische dieser Säuren als Komponente (A1) einzusetzen. Bevorzugt sind Phthalsäureanhydrid, Isophthalsäure und Terephthalsäure.

Ebenfalls als Säurekomponente geeignet sind Carbonsäuren mit einer Funktionalität von größer 2 (A2), wie z.B. Trimellitsäure oder Trimesinsäure (Funktionalität = 3, (A2')) oder Pyromellitsäure oder Benzophenontetracarbonsäure (Funktionalität = 4, (A2")) oder die möglichen Anhydride dieser Säuren. Es ist ebenfalls möglich, Gemische dieser Säuren als Komponente (A2) einzusetzen.

Geeignete Monocarbonsäuren (A3) sind ausgewählt aus der Gruppe der aliphatischen, cycloaliphatischen oder aromatischen, gesättigten oder ungesättigten Monocarbonsäuren mit 1 bis 18 Kohlenstoffatomen, bevorzugt 1 bis 12 und besonders bevorzugt 1 bis 8 Kohlenstoffatomen, wie z.B. Ameisensäure, Essigsäure, Propionsäure, Buttersäure, Isobuttersäure, Valeriansäure, 2-Methylbutansäure, 3-Methylbutansäure, 2,2-Dimethylpropansäure, 2-Ethylbutansäure, 2-Ethylhexansäure, Octansäure, Decansäure, Dodecansäure, Tetradecansäure, Hexadecansäure, Octadecansäure, gesättigte und ungesättigte Fettsäuren, Cyclohexancarbonsäure, Cyclohexensäure, Phenylessigsäure und Benzoesäure oder die Anhydride dieser Säuren. Es ist ebenfalls möglich, Gemische dieser Säuren als Komponente (A3) einzusetzen. Bevorzugt sind 2-Ethylhexansäure, gesättigte und/oder ungesättigte Fettsäuren, Cyclohexansäure und Benzoesäure.

Cyclische Lactame (B) sind Verbindungen der allgemeinen Formel (VI),

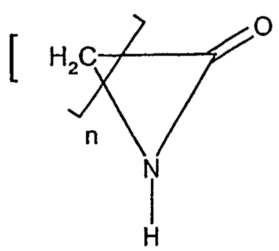

(VI)

wobei

n für eine ganze Zahl von 3 bis 5 steht.

Geeignete Verbindungen der Komponente (B) sind z.B. γ-Butyrolactam und ε-Caprolactam, bevorzugt ist ε-Caprolactam.

Als Alkoholkomponenten (C) sind geeignet:

(C1) aliphatische oder cycloaliphatische $C_3$-$C_{10}$-Polyole mit einer Funktionalität größer 2,
(C2) aliphatische oder cycloaliphatische $C_2$-$C_{18}$-Diole,
(C3) aliphatische, cycloaliphatische oder araliphatische monofunktionelle $C_1$-$C_{18}$-Alkohole.

Bei der Komponente (C1) handelt es sich um aliphatische oder cycloaliphatische $C_3$-$C_{10}$-Polyole mit einer Funktionalität größer 2, wie z.B. Glycerin, Trimethylolethan, Trimethylolpropan, Pentaerythrit, Dipentaerythrit, Sorbit, Umsetzungsprodukte dieser Polyole mit ε-Caprolacton oder Alkylenoxiden. Bevorzugt sind $C_3$-$C_8$-Polyole, wie Glycerin, Trimethylolpropan und Pentaerythrit. Es können auch Gemische der genannten Polyole als Komponente (C1) eingesetzt werden.

Bei der Komponente (C2) handelt es sich um aliphatische oder cycloaliphatische $C_2$-$C_{18}$-Diole, gegebenenfalls Ethersauerstoffatome enthaltende Alkohole, wie z.B. Ethylenglykol, Diethylenglykol, Triethylenglykol, Neopentylglycol, Propandiol-1,2 und -1,3, Dipropylenglykol, Butandiol-1,2, -1,3, -2,3 und -1,4, Pentandiol-1,5, 2,2-Diethylpropandiol, Hexandiol-1,6 und -2,5, 2-Methyl-2,4-pentandiol, 2-Methyl-1,3-propandiol, 2-Butyl-2-ethyl-1,3-propandiol, 3-Methyl-1,5-pentandiol, 2-Methyl-2-propyl-1,3-propandiol, 2,2-Diethyl-1,3-propandiol, Cyclohexan-1,4-dimethanol, Cyclohexandiol-1,2, -1,3 und -1,4, 2,2-Bis(4-hydroxycyclohexyl)-propan und Octahydro-4,7-methano-1H-indendimethanol oder Umsetzungsprodukte dieser Diole mit ε-Caprolacton oder Alkylenoxiden. Bevorzugt sind $C_2$-$C_{12}$-Diole. Gemische derartiger Diole können ebenfalls als Komponente (C2) verwendet werden. Bevorzugt sind Ethylenglykol, Diethylenglykol, Propandiol-1,2, Neopentylglykol, Hexandiol-1,6 und Cyclohexan-1,4-dimethanol.

Geeignete Verbindungen für Komponente (C3) sind aliphatische, cycloaliphatische oder araliphatische monofunktionelle $C_1$-$C_{18}$-Alkohole, wie z.B. Methanol, Ethanol, 1- und 2-Propanol, 1- und 2-Butanol, Isobutanol, tert.-Butanol, 1-, 2- und 3-Pentanol, 2-Methyl-1-butanol, 3-Methyl-1-butanol, 2,2-Dimethylpropanol, 1-, 2- und 3-Hexanol, 4-Methyl-2-pentanol, 2-Ethyl-1-butanol, 2,2-Dimethylpropanol, 1-Octanol, 2-Ethyl-1-hexanol, 1-Nonanol, Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol, Benzylalkohol, 1-Methyl-4t-isopropylcyclohexanol = (-)-Menthol, Decahydro-2-naphthol, (1R-endo)-1,7,7-Trimethyl-bicyclo[2,2,1]heptan-2-ol, (1R-exo)-1,7,7-Trimethyl-bicyclo-[2,2,1]heptan-2-ol und (1R)-6,6-Dimethylbicyclo[3,1,1]hept-2-en-2-methanol oder Umsetzungsprodukte dieser Monoalkohole mit ε-Caprolacton oder Alkylenoxiden. Bevorzugt sind $C_1$-$C_{12}$-Alkohole, wie z.B. 1-und 2-Butanol, Isobutanol, 2-Ethyl-1-hexanol, 1-Nonanol, 1-Decanol, 1-Dodecanol, Cyclohexanol, 3,3,5-Trimethylcyclohexanol, 4-tert.-Butylcyclohexanol, Benzylalkohol. Besonders bevorzugt sind $C_1$-$C_{10}$-Alkohole, wie z.B. 2-Ethyl-1-hexanol, Cyclohexanol, 3,3,5-Trimethylcyclohexanol, 4-tert.-Butylcyclohexanol und Benzylalkohol. Gemische derartiger Monoalkohole können ebenfalls als Komponente (C3) verwendet werden.

Als Isocyanuratkomponente (D) sind geeignet Trishydroxyethylisocyanurat (D1) oder die Umsetzungsprodukte mit ε-Caprolacton oder Alkylenoxiden.

Ebenfalls als Isocyanuratkomponente (D) sind Isocyanuratgruppen enthaltende Modifizierungsprodukte von einfachen Diisocyanaten (D2), wie z.B. Hexamethylendiisocyanat (HDI), 1-Isocyanato-3,3,5-trimethyl-5-isocyanatomethylcyclohexan (Isophorondiisocyanat, IPDI), Diisocyanatodicyclohexylmethan, 2,4- und 2,6-Diisocyanatotoluol (TDI), 2,4'- und 4,4'-Diisocyanatodiphenylmethan geeignet. Bevorzugt wird (D1) eingesetzt.

Gegenstand der Erfindung ist ebenfalls ein Verfahren zur Herstellung der erfindungsgemäßen Polyesterpolyole enthaltend Struktureinheiten der allgemeinen Formel (I) und wenigstens eine Struktureinheit ausgewählt aus der Gruppe bestehend aus Struktureinheiten der Formel (II) und Formel (III) durch

(I) Umsetzung eines Anhydrids der Trimellitsäure und/oder der Pyromellitsäure mit einem cyclischen Lactam (B),

(II) Aufbau eines hydroxyfunktionellen Polyesters durch Zugabe von

- Trishydroxyethylisocyanurat (D1) und
- gegebenenfalls einer Alkoholkomponente (C) enthaltend
- ein oder mehrere aliphatische oder cycloaliphatische $C_3$-$C_{10}$-Polyole mit einer Funktionalität größer 2 (C1),
- ein oder mehrere aliphatische oder cycloaliphatische $C_2$-$C_{18}$-Diole (C2) und
- ein oder mehrere aliphatische, cycloaliphatische oder araliphatische monofunktionelle $C_1$-$C_{18}$-Alkohole (C3), sowie gegebenenfalls Zugabe einer Säurekomponente (A) enthaltend
- ein oder mehrere difunktionelle Carbonsäuren oder deren Anhydride (A1) und/oder
- ein oder mehrere polyfunktionelle Carbonsäuren oder deren Anhydride (A2) und
- ein oder mehrere Monocarbonsäuren (A3),

sowie gegebenenfalls Zugabe einer isocyanurathaltigen Isocyanatkomponente (D2).

Gegenstand der Erfindung ist ebenfalls ein Verfahren zur Herstellung der erfindungsgemäßen Polyesterpolyole enthaltend Struktureinheiten der allgemeinen Formel (I) und wenigstens eine Struktureinheit ausgewählt aus der Gruppe bestehend aus Struktureinheiten der Formel (IV) und Formel (V) durch

(I) Umsetzung eines Anhydrids einer difunktionellen Carbonsäure (A1) mit einem cyclischen Lactam (B),

(II) Aufbau eines hydroxyfunktionellen Polyesters durch Zugabe von

- Trishydroxyethylisocyanurat (D1) und
- gegebenenfalls einer Alkoholkomponente (C) enthaltend
- ein oder mehrere aliphatische oder cycloaliphatische $C_3$-$C_{10}$-Polyole mit einer Funktionalität größer 2 (C1),
- ein oder mehrere aliphatische oder cycloaliphatische $C_2$-$C_{18}$-Diole (C2) und
- ein oder mehrere aliphatische, cycloaliphatische oder araliphatische monofunktionelle $C_1$-$C_{18}$-Alkohole (C3),

sowie gegebenenfalls durch Zugabe einer Säurekomponente (A) enthaltend

- ein oder mehrer difunktionelle Carbonsäuren oder deren Anhydride (A1) und/oder
- ein oder mehrere polyfunktionelle Carbonsäuren oder deren Anhydride (A2) und
- ein oder mehrerer Monocarbonsäuren (A3),

sowie gegebenenfalls durch Zugabe einer isocyanurathaltigen Isocyanatkomponente (D2).

Eine allgemeine Übersicht zur (präparativen) Herstellung von Polyesterpolyolen und den Reaktionsbedingungen wird beispielsweise in "Ullmanns Encyclopädie der Technischen Chemie", Verlag Chemie Weinheim, 4. Auflage (1980) Band 19, Seiten 61 ff. oder von H. Wagner und H. F. Sarx in "Lackkunstharze", Carl Hanser Verlag, München (1971), Seiten 86 bis 152 gegeben.

Die erfindungsgemäßen Polyesterpolyole können sowohl zu lösemittelhaltigen Bindemitteln bzw. Lösungen, als auch zu wässrigen Bindemitteln bzw. wässrigen Lösungen oder Dispersionen weiterverarbeitet werden. Zur Herstellung von wässrigen Dispersionen der erfindungsgemäßen Polyester werden die freien Carboxylgruppen mit einem Neutralisationsmittel neutralisiert.

Es ist ebenfalls möglich im erfindungsgemäßen Verfahren die Struktureinheiten (I) ausschließlich über die Komponenten (D2) einzuführen.

In einer bevorzugten Ausführungsform des erfindungsgemäßen Verfahrens werden Säureanhydrid und Lactam, gegebenenfalls in Gegenwart von Alkoholen (C), ausgewählt aus der Gruppe (C1) bis (C3) und der Komponente (D1), in einer ersten Stufe miteinander umgesetzt, wobei Struktureinheiten mit cyclischen Imidgruppen entstehen. Dabei ist es bevorzugt als Alkohol-Komponenten (C2) einzusetzen. In einer zweiten Stufe erfolgt dann die Veresterung mit den restlichen Polyesterbausteinen, wie Säurekomponenten (A) und Alkoholkomponenten (C). Als Säurekomponente wird bevorzugt die Säurekomponente (A1) eingesetzt. Die Isocyanuratstrukturen (I) werden bevorzugt durch die Komponente (D1) in die erfindungsgemäßen Polyesterpolyole eingeführt. Das erfindungsgemäße Verfahren wird bevorzugt in der Schmelze, gegebenenfalls in Gegenwart einer katalytischen Menge eines üblichen Veresterungskatalysators, wie z.B. Säuren, Basen oder Übergangsmetallverbindungen, wie z.B. Titantetrabutylat, Dibutylzinnoxid oder Butylzinnsäure, bei Temperaturen von 80 bis 270°C, bevorzugt von 100 bis 260°C, durchgeführt. Gegebenenfalls kann auch ein Schleppmittel, wie z.B. Xylol, zum Austragen des Reaktionswassers zugegeben werden. Die Veresterungsreaktion wird so lange durchgeführt, bis die angestrebten Werte für die Hydroxyl- und Säurezahl sowie für die Viskosität, erreicht sind. Alternativ können die Isocyanuratstrukturen (I) auch durch Umsetzung des Polyesterpolyols mit der isocyanurathaltigen Isocyanatkomponente (D2) eingeführt werden. Bevorzugt erfolgt in einer dritten Stufe die Umsetzung des hydroxyfunktionellen Polyesters mit einem cyclischen Carbonsäureanhydrid, ausgewählt aus der Gruppe der 2fach-funktionellen Carbonsäuren (A1) und/oder 3fach-funktionellen Carbonsäuren (A2'), unter Ringöffnung und Halbesterbildung.

Es ist grundsätzlich ebenfalls möglich, die Komponenten alle in einem Schritt zu den erfindungsgemäßen Polyestern umzusetzen.

Die entstandenen Carboxylgruppen der erfindungsgemäßen Polyesterpolyole können gegebenenfalls mit einem Neutralisationsmittel vollständig, teilweise oder überneutralisiert werden, wodurch der erfindungsgemäße Polyester wasserverdünnbar wird. Dabei kann das Neutralisationsmittel vor, während oder nach der Überführung des erfindungsgemäßen Esters in die wässrige Phase zugegeben werden.

Ein weiterer Gegenstand der Erfindung sind wässrige Lösungen oder Dispersionen, die die erfindungsgemäßen Polyesterpolyole enthalten.

Zur Herstellung derartiger Polyester-Lösungen oder -Dispersionen wird das erfindungsgemäße Polyesterpolyol, gegebenenfalls unter starker Scherung, wie z.B. starkem Rühren, entweder in Wasser eingetragen oder man rührt

umgekehrt Wasser zu dem Polyesterpolyol. Das Dispergier- oder Lösungsmedium Wasser kann dabei auch gleichzeitig das Neutralisationsmittel und/oder andere Zusätze enthalten.

Geeignete Neutralisationsmittel (E) sind sowohl anorganische als auch organische Basen. Bevorzugt werden primäre, sekundäre und tertiäre Amine, wie z.B. Ammoniak, Ethylamin, Propylamin, Dimethylamin, Dibutylamin, Cyclohexylamin, Benzylamin, Morpholin, Piperidin, Diethanolamin und Triethanolamin verwendet. Bevorzugt werden tertiäre Amine, wie z.B. Triethylamin, N,N-Dimethylethanolamin, N,N-Diethylethanolamin, Triethanolamin, Triisopropylamin, N-Methylmorpholin, 2-Amino-2-methyl-propanol eingesetzt. Besonders bevorzugt sind N,N-Dimethylethanolamin, Triethanolamin und Triethylamin.

Üblicherweise werden die Neutralisationsmittel (E) in Mengen von 0,4 bis 1,3 Mol, bevorzugt von 0,5 bis 1,2 Mol und besonders bevorzugt 0,6 bis 1,1 Mol, bezogen auf je Mol freie Carboxylgruppen des Polyesters, eingesetzt.

Es ist auch möglich, die erfindungsgemäßen Polyesterpolyole nach der 2. oder der 3. Reaktionsstufe in einem organischen Lösungsmittel zu lösen und die Polyesterlösung für die Herstellung von lösemittelhaltigen Bindemitteln einzusetzen.

Daher sind organische Lösungen der erfindungsgemäßen Polyesterpolyole ein weiterer Gegenstand der Erfindung.

Geeignete Lösemittel sind beispielsweise Ester, wie z.B. Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Aus den erfindungsgemäßen Polyesterpolyolen bzw. ihren wässrigen Dispersionen oder wässrigen oder organischen Lösungen können Bindemittel für Zweikomponenten (2K)-Polyurethan-Lacke hergestellt werden.

Im Falle von blockierten Polyisocyanaten ist es ebenfalls möglich, die erfindungsgemäßen Polyesterpolyole bzw. ihre Lösungen oder Dispersionen in Einkomponenten(1K)-Polyurethan-Lacken einzusetzen. Es ist ebenfalls möglich, die erfindungsgemäßen Polyesterpolyole in Kombination mit Aminoharzen, z.B. Melaminharzen, in Einkomponenten (1K)-Lacken einzusetzen. Bevorzugt ist die Verwendung in 2K-Polyurethan-Lacken.

Ebenfalls Gegenstand der Erfindung sind Beschichtungsmittel, enthaltend die erfmdungsgemäßen Polyesterpolyole.

Als Polyisocyanatkomponente können unblockierte oder blockierte Polyisocyanate eingesetzt werden, welche durch Modifizierung einfacher aliphatischer, cycloaliphatischer, araliphatischer und/oder aromatischer Diisocyanate, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur erhältlich sind, wie sie beispielsweise in J. Prakt. Chem. 336 (1994) Seite 185-200 beispielhaft beschrieben sind.

Geeignete Diisocyanate zur Herstellung der Polyisocyanate sind durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)-isocyanatomethylcyclohexan, Bis-(isocyanatomethyl)-norbornan, 1,3- und 1,4-Bis-(2-isocyanatoprop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Weiterhin sind auch Triisocyanate wie Triphenylmethan-4,4',4''-triisocyanat und/oder 4-Isocyanatomethyl-1,8-octandiisocyanat geeignet.

Bevorzugt werden Polyisocyanate oder Polyisocyanatgemische der genannten Art mit ausschließlich aliphatisch und/oder cycloaliphatisch gebundenen Isocyanatgruppen eingesetzt.

Besonders bevorzugt sind Polyisocyanate oder Polyisocyanatgemische mit Isocyanurat und/oder Biuretstruktur auf Basis von HDI, IPDI und/oder 4,4'-Diisocyanatodicyclohexylmethan.

Um eine bessere Einarbeitbarkeit der genannten Polyisocyanate in wässrige Bindemittel zu erzielen, sind die Polyisocyanate bevorzugt hydrophil modifiziert. Eingesetzt werden dazu nach an sich bekannten Methoden Polyisocyanate der oben genannten Art. Die Hydrophilierung kann z.B. anionisch, kationisch oder nichtionisch, über interne oder externe Emulgatoren erfolgen.

Durch interne Emulgatoren hydrophilierte Polyisocyanate sind z.B. solche, die durch Carboxylgruppen hydrophiliert wurden und sich nach Neutralisation der Carboxylgruppen sehr feinteilig in wässrige Systeme einrühren lassen, ohne dass hohe Scherkräfte erforderlich sind. Solche Polyisocyanate sind z. B. Gegenstand der EP-A 443 138 und EP-A 510 438. Weiterhin sind durch Polyether hydrophil-modifizierte Polyisocyanate einsetzbar. Die Herstellung solcher wasserdispergierbaren, urethangruppenhaltigen Polyisocyanate ist beispielsweise Gegenstand der EP-A 206 059, EP-A 540 985 und der US-P 5 200 489. Mit Polyethern hydrophil modifizierte, wasserdispergierbare, Allophanatgruppen

aufweisende Polyisocyanate und deren Herstellung sind Gegenstand der EP-A 0 959 087. 2K-PUR-Lacke auf Basis diese Polyisocyanate sind Gegenstand der EP-A 959 115 und der EP-A 1 065 228.

Ebenfalls geeignet sind die in der EP-A 0 703 255 beschriebenen wasseremulgierbaren Polyisocyanate, die als ionische Emulgatoren Reaktionsprodukte aus Polyisocyanaten und beliebigen hydroxy-, mercapto- oder aminofunktionellen Verbindungen mit mindestens einer schwefelsauren Gruppe bzw. deren Anion enthalten. Als bevorzugte schwefelsaure Aufbaukomponenten zur Herstellung der Emulgatoren werden dabei Hydroxysulfonsäuren mit aliphatisch gebundenen OH-Gruppen oder die Salze solcher Hydroxysulfonsäuren genannt, beispielsweise spezielle Polyethersulfonate, wie sie z.B. unter der Bezeichnung Tegomer® (Th. Goldschmidt AG, Essen, DE) gehandelt werden, Bisulfit-Addukte an ungesättigte Alkohole, Hydroxyethan- und Hydroxypropansulfonsäure sowie Aminosulfobetaine, die sich durch Quarternierung tertiärer Aminoalkohole mit 1,3-Propansulton herstellen lassen. Bevorzugt sind auch 2-(Cyclohexylamino)-ethansulfonsäure und 3-(Cyclohexylamino)-propansulfonsäure oder deren Salze als Hydrophilierungskomponenten.

Geeignete externe Emulgatoren sind beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20, 1987 (Teil 1, Seiten 259 bis 262) angegeben oder Alkylpolyethersulfate oder nichtionische Emulgatoren, wie z.B. die Alkoxylierungs-, bevorzugt Ethoxylierungsprodukte von Alkanolen, Phenolen oder Fettsäuren.

Die Polyisocyanate weisen einen NCO-Gehalt von 1 bis 45 Gew.-%, bevorzugt von 8 bis 25 Gew.-% auf. Sie können gegebenfalls mit einem mit Wasser zumindest teilweise mischbaren, aber gegenüber Isocyanatgruppen inerten Lösungsmittel verdünnt werden.

Bevorzugt werden durch interne Emulgatoren hydrophilierte, urethangruppenhaltige Polyisocyanate, die z.B. Gegenstand der EP-A 540 985 sind und allophanatgruppenhaltige Polyisocyanate, die z.B. in der EP-A 0 959 087 beschrieben sind, eingesetzt. Besonders bevorzugt werden allophanatgruppenhaltige, Polyether-modifizierte Polyisocyanate eingesetzt, offenbart in der EP-A 0 959 087. Bevorzugt sind 60 bis 99 mol-% des Polyethers über Allophanatgruppen am Polyisocyanat gebunden.

Gegenstand der vorliegenden Erfindung ist auch ein Verfahren zur Herstellung lösemittelhaltiger oder wässriger Beschichtungsmittel, **dadurch gekennzeichnet, dass** in das Bindemittel, enthaltend die erfindungsgemäßen Polyesterpolyole, die Polyisocyanatkomponente und gegebenenfalls weitere Bindemittel eingerührt oder einemulgiert werden.

Das Mengenverhältnis von Bindemittel- und Härterkomponente wird dabei so gewählt, dass auf jede Hydroxylgruppe der Harzkomponente 0,1 bis 3,0, bevorzugt 0,5 bis 2,0 und besonders bevorzugt 0,7 bis 1,7 Isocyanatgruppen der Härterkomponente entfallen.

Vor der Zugabe der Härterkomponente können der Bindemittel- oder der Härterkomponente, bevorzugt jedoch der Bindemittelkomponente, die üblichen Hilfs- und Zusatzmittel der Lacktechnologie einverleibt werden. Hierzu gehören beispielsweise Entschäumer, Verdicker, Verlaufsmittel, Pigmente, Füllstoffe, Emulgatoren, Dispergierhilfsmittel, Lichtschutzmittel und auch Lösemittel.

Die gewünschte Verarbeitungsviskosität wird in aller Regel durch die Zugabe von Lösemittel oder Wasser eingestellt. Um ganz bestimmte Verarbeitungsviskositäten einzustellen oder besondere rheologische Eigenschaften zu erzielen, ist es auch möglich, Verdickungsmittel oder Kombinationen von verschiedenen Verdickungsmitteln, z.B. ionische und assoziative Verdicker, einzusetzen.

Geeignete Substrate sind z.B. mineralische Baustoffoberflächen, Straßenbeläge, Holz und Holzwerkstoffe, metallische Oberflächen, Kunststoffe, Glas, Textilien, Gewebe oder Papier.

Die Beschichtungsmittel, enthaltend die erfindungsgemäßen Polyesterpolyole, werden als Einkomponenten (1K)- oder als Zweikomponenten(2K)-Lacke verwendet.

Bevorzugt werden die Beschichtungsmittel, enthaltend die erfindungsgemäßen Polyesterpolyole, als Grundierungen, Füller, pigmentierte Decklacke und Klarlacke im Bereich der Autoreparatur- und Großfahrzeuglackierung, der allgemeinen Industrielackierung, der Kunststofflackierung, der Holzlackierung sowie bei Korrosionsschutzanwendungen verwendet. Besonders bevorzugt sind die Verwendung für Anwendungen, in denen eine besonders hohe Applikationssicherheit, eine schnelle Trocknung, ein schneller Härteanstieg bei hoher Endhärte aber trotzdem guter Elastizität, eine sehr gute Optik, gekennzeichnet durch sehr guten Verlauf und hohen Glanz, sowie gute Beständigkeiten gegen Lösemittel, Chemikalien, Wasser und Witterung gefordert werden, wie z.B. in der Autoreparatur- und Großfahrzeuglackierung oder in der Allgemeinen Industrielackierung.

Die Beschichtungsmittel, enthaltend die erfindungsgemäßen Polyesterpolyole, können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Streichen, Rollen, Gießen oder Rakeln auf die jeweiligen Substrate appliziert werden.

Die Trocknung und Aushärtung der Beschichtungen erfolgt im Allgemeinen unter normalen Temperaturbedingungen, d.h. ohne Erhitzung der Beschichtung. Die erfindungsgemäßen Beschichtungsmittel können jedoch auch zur Herstellung von Beschichtungen eingesetzt werden, die nach Applikation bei erhöhter Temperatur, z.B. bei 40 bis 250°C, bevorzugt bei 40 bis 150°C und besonders bevorzugt bei 40 bis 100°C getrocknet und ausgehärtet werden.

Die erfindungsgemäßen Polyesterpolyole mit cyclischen Imid- und Isocyanuratgruppen führen zu verbesserten Eigenschaften der daraus hergestellten Beschichtungen. Lösemittelhaltige und wässrige Zweikomponenten-Polyurethanlacke, enthaltend die erfindungsgemäßen Polyesterpolyole, liefern Überzüge mit sehr schneller Trocknung, hoher Härte und zugleich guter Elastizität, hoher Beständigkeit gegen Lösemittel, Chemikalien und Wasser, sehr gutem Verlauf sowie sehr hohem Glanz. Wässrige Dispersionen auf Basis der erfindungsgemäßen Polyesterpolyole weisen im Vergleich zu den Polyesterdispersionen des Standes der Technik eine bessere Lagerbeständigkeit, selbst bei erhöhten Temperaturen von 40 bis 50°C, und eine bessere Hydrolysefestigkeit auf.

**Beispiele**

In den folgenden Beispielen beziehen sich alle Prozentangaben auf das Gewicht.
Die Angabe "Festgehalt" wurde nach der Dickschichtmethode bestimmt, bei der eine definierte Probenmenge 1 h bei 125°C im Konfektionsofen eingetrocknet wird und der Festgehalt über die resultierende Gewichtsabnahme berechnet wird (Grundlage DIN EN ISO 3251).
Die Säurezahl (mg KOH/g Probe) wurde durch Titration mit 0,1 mol/l NaOH-Lösung auf Grundlage der DIN 53 402 bestimmt.
Die OH-Zahl (mg KOH/g Probe) wurde durch Acetylierung, Hydrolyse und anschließender Titration des freigesetzten HCl mit 0,1 mol/l NaOH auf Grundlage der DIN 53 240 bestimmt.
Sofern nicht anders angegeben wurden die Viskositäten bei 23°C auf einen Rotationsviskosimeter VT 550 der Firma Haake GmbH, Karlsruhe, DE bestimmt.
Unter der Angabe "Lieferform" wird die vorliegende Lösung oder Dispersion der Polyesterpolyole verstanden; Unter "Festharz" wird der nichtflüchtige Harz-Anteil der vorliegenden Lösung oder Dispersion verstanden.

**Beispiel 1:** Herstellung eines wasserverdünnbaren Polyesterpolyols I

335g Neopentylglykol, 636 g 1,4-Cyclohexandimethanol, 734 g Trimellitsäureanhydrid und 432 g ε-Caprolactam wurden zusammen in einen Reaktor, der mit Rührer, Heizung, automatischer Temperatursteuerung, Stickstoffeinleitung, Kolonne, Wasserabscheider und Vorlage ausgerüstet war, eingewogen und unter Rühren und Durchleiten von Stickstoff so auf 230°C aufgeheizt, dass die Kopftemperatur an der Kolonne 103°C nicht überstieg. Dabei schied sich das Reaktionswasser ab. Es wurde bis zu einer Säurezahl von ≤ 5 mg KOH/g kondensiert. Dann wurde auf 150°C abgekühlt und es wurden 829 g Neopentylglykol, 394 g Trimethylolpropan, 627 g Trishydroxyethylisocyanurat und 1787 g Phthalsäureanhydrid zugegeben. Anschließend wurde unter Rühren und Durchleiten von Stickstoff so auf 220°C aufgeheizt, dass die Kopftemperatur an der Kolonne 103°C nicht überstieg. Dabei schied sich weiter Reaktionswasser ab. Nach beendeter Destillation wurde der Wasserabscheider durch eine Destillationsbrücke ersetzt und die Reaktionsmischung so lange bei 220°C gerührt, bis die Kopftemperatur der Kolonne auf unter 90°C sank. Die Kolonne wurde entfernt und die Reaktionsmischung wurde bei erhöhtem Stickstoffstrom bis zu einer Säurezahl von ≤ 5 mg KOH/g kondensiert. Danach wurde auf 140°C abgekühlt, 418 g Trimellitsäureanhydrid zugegeben und bei 170°C so lange gerührt, bis eine Säurezahl von 35 mg KOH/g erreicht war. Bis zu diesem Zeitpunkt der Herstellung des Polyesters wurden durch Ziehen von Proben und weiteren Entnahmen insgesamt 1770 g Polyesterharz entnommen. Danach wurde auf 130°C abgekühlt, 210 g Dipropylenglykoldimethylether zugegeben und 1 Stunde bei 100°C eingelöst. Dann wurde diese entstandene Lösung in eine auf 50°C erwärmte Mischung aus 104 g N,N-Dimethylethanolamin und 2805 g deionisiertem Wasser abgelassen und darin innerhalb 1 Stunde bei 50°C eingerührt. Das resultierende Produkt wurde mit weiterem Wasser auf einen Festgehalt von 53 Gew.-% eingestellt. Es entstand eine bläulich schimmernde, opake Dispersion mit einem Festgehalt von 52,0 Gew.-% an Polyesterpolyol, einer Säurezahl von 16,9 mg KOH/g (bezogen auf Lieferform), einer OH-Zahl von 104 mg KOH/g (bezogen auf Festharz) und einer Viskosität von 1498 mPa·s bei 23°C. Die Dispersion enthielt 2,8 Gew.-% Dipropylenglykoldimethylether, 1,5 Gew.-% N,N-Dimethylethanolamin und 42,7 Gew.-% Wasser. Das Produkt ist weiter mit Wasser verdünnbar und zum Einsatz in wässrigen Zweikomponenten-Polyurethanlacken geeignet.

**Beispiel 2:** Herstellung eines wasserverdünnbaren Polyesterpolyols II

Analog Beispiel 1 wurde ein wasserverdünnbares Polyesterpolyol bzw. ein wässriger Polyester aus folgenden Komponenten hergestellt:

1523 g Trimethylolpropan, 552 g Trishydroxyethylisocyanurat, 874 g Trimellitsäureanhydrid, 515 g ε-Caprolactam, 725 g 2-Ethylhexansäure, 446 g Benzoesäure, 808 g Hexahydrophthalsäureanhydrid, 347 g Trimellitsäureanhydrid, 210 g N-Methylpyrrolidon und 120 g N,N-Dimethylethanolamin. Das resultierende Produkt wurde mit Wasser auf einen Festgehalt von 43 Gew.-% eingestellt. Es entstand eine bläulich schimmernde, opake Dispersion mit einem Festgehalt von 42,6 Gew.-% an Polyesterpolyol, einer Säurezahl von 18,3 mg KOH/g (bezogen auf Lieferform),

einer OH-Zahl von 84 mg KOH/g (bezogen auf Festharz) und einer Viskosität von 2253 mPa·s bei 23°C. Die Dispersion enthielt 2,2 Gew.-% N-Methylpyrrolidon, 1,4 Gew.-% N,N-Dimethylethanolamin und 53,4 Gew.-% Wasser. Das Produkt ist weiter mit Wasser verdünnbar und zum Einsatz in wässrigen Zweikomponenten-Polyurethanlacken geeignet.

**Beispiel 3:** Herstellung eines wasserverdünnbaren Polyesterpolyols III

Analog Beispiel 1 wurde ein wasserverdünnbares Polyesterpolyol bzw. ein wässriger Polyester aus folgenden Komponenten hergestellt:

1215 g Trishydroxyethylisocyanurat, 770 g Trimellitsäureanhydrid, 454 g ε-Caprolactam, 1006 g Trimethylolpropan, 725 g 2-Ethylhexansäure, 446 g Benzoesäure, 727 g Hexahydrophthalsäureanhydrid, 347 g Trimellitsäureanhydrid, 210 g N-Methylpyrrolidon und 121 g N,N-Dimethylethanolamin. Das resultierende Produkt wurde mit Wasser auf einen Festgehalt von 49 Gew.-% eingestellt. Es entstand eine bläulich schimmernde, opake Dispersion mit einem Festgehalt von 48,1 Gew.-% an Polyesterpolyol, einer Säurezahl von 19,1 mg KOH/g (bezogen auf Lieferform), einer OH-Zahl von 78 mg KOH/g (bezogen auf Festharz) und einer Viskosität von 2830 mPa·s bei 23°C. Die Dispersion enthielt 2,6 Gew.-% N-Methylpyrrolidon, 1,6 Gew.-% N,N-Dimethylethanolamin und 46,8 Gew.-% Wasser. Das Produkt ist weiter mit Wasser verdünnbar und zum Einsatz in wässrigen Zweikomponenten-Polyurethanlacken geeignet.

**Beispiel 4, Vergleich:** Herstellung eines wasserverdünnbaren Polyesterpolyols IV

Polyesterpolyol hergestellt analog Beispiel 1, jedoch sind Trimellitsäureanhydrid und ε-Caprolactam durch Isophthalsäure und Trishydroxyethylisocyanurat durch Trimethylolpropan ersetzt.

Analog Beispiel 1 wurde ein wasserverdünnbares Polyesterpolyol bzw. ein wässriger Polyester aus folgenden Komponenten hergestellt:

1286 g Neopentylglykol, 574 g 1,4-Cyclohexandimethanol, 846 g Trimethylolpropan, 586 g Isophthalsäure, 2089 g Phthalsäureanhydrid, 418 g Trimellitsäureanhydrid, 210 g Dipropylenglykoldimethylether und 123 g N,N-Dimethylethanolamin. Das resultierende Produkt wurde mit Wasser auf einen Festgehalt von 41 Gew.-% eingestellt. Es entstand eine bläulich schimmernde, opake Dispersion mit einem Festgehalt von 40,5 Gew.-% an Polyesterpolyol, einer Säurezahl von 13,8 mg KOH/g (bezogen auf Lieferform), einer OH-Zahl von 115 mg KOH/g (bezogen auf Festharz) und einer Viskosität von 442 mPa·s bei 23°C. Die Dispersion enthielt 2,2 Gew.-% Dipropylenglykoldimethylether, 1,3 Gew.-% N,N-Dimethylethanolamin und ca. 55,5 Gew.-% Wasser. Das Produkt ist weiter mit Wasser verdünnbar und zum Einsatz in wässrigen Zweikomponenten-Polyurethanlacken geeignet.

**Beispiel 5, Vergleich:** Herstellung eines wasserverdünnbaren Polyesterpolyols V

Polyesterpolyol hergestellt analog Beispiel 2 oder 3, wobei Trimellitsäureanhydrid und ε-Caprolactam durch Isophthalsäure, Trishydroxyethylisocyanurat durch Trimethylolpropan und Benzoesäure durch 2-Ethylhexansäure ersetzt wird.

Analog Beispiel 2 wird ein wasserverdünnbares Polyesterpolyol bzw. ein wässriger Polyester aus folgenden Komponenten hergestellt:

1272 g 2-Ethylhexansäure, 957 g Hexahydrophthalsäureanhydrid, 2184 g Trimethylolpropan,

1032 g Isophthalsäure, 288 g Trimellitsäureanhydrid, 215 g N-Methylpyrrolidon und 133 g N,N-Dimethylethanolamin. Das resultierende Produkt wurde mit Wasser auf einen Festgehalt von 44 Gew.-% eingestellt. Es entstand eine bläulich schimmernde, opake Dispersion mit einem Festgehalt von 43,2 Gew.-% an Polyesterpolyol, einer Säurezahl von 14,3 mg KOH/g (bezogen auf Lieferform), einer OH-Zahl von 139 mg KOH/g (bezogen auf Festharz) und einer Viskosität von 93 mPa·s bei 23°C. Die Dispersion enthielt 2,2 Gew.-% N-Methylpyrrolidon, 1,8 Gew.-% N,N-Dimethylethanolamin und 52,8 Gew.-% Wasser. Das Produkt ist weiter mit Wasser verdünnbar und zum Einsatz in wässrigen Zweikomponenten-Polyurethanlacken geeignet.

**Anwendungsbeispiele**

Bei den nachfolgenden Anwendungsbeispielen wurden nach üblichen Methoden der Lacktechnologie pigmentierte Zweikomponenten-Polyurethanlacke für verschiedene Anwendungsgebiete hergestellt und unter üblichen Bedingungen auf Prüfbleche appliziert und ausgehärtet. Neben den spezifischen Lackeigenschaften für die einzelnen Anwendungen, wie z. B. Lösemittel- und Chemikalienbeständigkeit, Filmhärte und Flexibilität wurden hauptsächlich die Trocknungsgeschwindigkeit der Lacke, der Verlauf und der Glanz der Filme sowie die Wasserbeständigkeit beurteilt.

Eingesetzte Produkte:

| | |
|---|---|
| Surfynol® 104 E: | Entschäumendes Netzmittel, Air Products, vertrieben durch W. Biesterfeld&Co., Hamburg, DE |
| Tronox® R-KB-4: | Titandioxid-Pigment, Kerr McGee Pigments GmbH&Co. KG, DE |
| Acrysol® RM 8: | 20 %ig in Ethanol, Verdicker, Rohm&Haas Deutschland GmbH, Frankfurt/Main, DE |
| Byk® 346 | Verlaufsadditiv/Untergrundbenetzung, Byk Chemie, Wesel, DE |
| Byk® 380 | Verlaufsadditiv/Antikratermittel, Byk Chemie, Wesel, DE |
| Bayhydur® VP LS 2319 | Hydrophiliertes, aliphatisches Polyisocyanat, Bayer AG Leverkusen, DE |
| Surfynol® 104 BC | Entschäumendes Netzmittel, Air Products, vertrieben durch W. Biesterfeld&Co., Hamburg, DE |
| Baysilone® VP AI 3468 | 10%ig in Butylglykol, Slip-Additiv, Borchers GmbH, Monheim, DE |
| Borchigen® SN 95 | Netz- und Dispergiermittel, Borchers GmbH, Monheim, DE |
| Borchigel® PW 25 | Verdickungsmittel, Borchers GmbH, Monheim, DE |

**Beispiel 6:**

Weißer Zweikomponenten-Decklack für die allgemeine Industrielackierung auf Basis des Polyesterpolyols gemäß Beispiel 1.

Komponente 1

Es wurde in einem handelsüblichen Dissolver (15 Min. bei einer Randgeschwindigkeit von 10 m/s) ein Mahlgut nach folgender Formulierung hergestellt:

33,00 Gew.-Teile Polyesterpolyol I
0,81 Gew.-Teile Surfynol® 104 E
30,12 Gew.-Teile Titandioxid Tronox® R-KB-4
3,13 Gew.-Teile entionisiertes Wasser

Das Mahlgut wurde mit Siliquarzperlen vom Durchmesser 2 mm in einem Skandex-Schüttler ca. 60 Minuten dispergiert. Danach wurde das Mahlgut durch Sieben von den Glasperlen abgetrennt. Unter Rühren wurden die folgenden Lackkomponenten zugegeben (Auflackung):

12,20 Gew.-Teile Polyesterpolyol I (aus Beispiel 1)
0,55 Gew.-Teile Acrysol® RM 8, 20 %ig in Ethanol
0,21 Gew.-Teile Byk® 346
0,32 Gew.-Teile Byk® 380

Danach ist die Komponente 1 (formulierte Polyolkomponente) für die weitere Verwendung einsatzbereit. Zur Herstellung eines Zweikomponentenlackes wurde die Komponente 1 mit dem Polyisocyanathärter (Komponente 2) gemischt. Die Komponente 2 enthält folgende Bestandteile:

Komponente 2

15,73 Gew.-Teile Bayhydur® VP LS 2319
3,93 Gew.-Teile Methoxypropylacetat
100,00 Gew.-Teile

Die Mischung der Komponenten 1 und 2 erfolgte innerhalb von 2 Minuten bei einer Rührerdrehzahl von 2000 U/min. Danach wurde der fertige Zweikomponentenlack auf eine Spritzviskosität von ca. 30 s (Auslaufzeit aus DIN-4 mm-Becher bei 23°C) eingestellt. Der so eingestellte Weißlack wurde mittels einer handelsüblichen Spritzpistole (Sata Jet B, Düse 1,4 mm, Druck 3,5 bis 4 bar) auf Prüfbleche appliziert [Stahl: 20 x 10 cm, Aluminium: 15 x 7 cm, Zink: 16,5 x 6,5 cm und Unibond WH/60/OC (eisenphosphatierter Stahl): 20x10 cm] und nach 1 Tag, 7 Tagen und 14 Tagen bei Raumtemperaturtrocknung (23°C, 50 % rel. Luftfeuchtigkeit) lacktechnisch geprüft.

Mittels eines Rakels (120 μm Spaltbreite) wurde der Lack auf Glasplatten appliziert und bei Raumtemperaturtrocknung die Antrocknung, die Dämpfungsdauer und der Glanz bestimmt. Das Potlife (definiert als Zeitdauer, nach der eine Verdoppelung der Spritzviskosität auftritt) wurde durch Messung der Auslaufzeit (DIN-4 mm-Becher bei 23°C) ermittelt. Die Bestimmung der Antrocknung wurde gemäß DIN 53 150 durchgeführt. An den ausgehärteten Beschichtungen wurden folgende lacktechnische Eigenschaften geprüft:

| | |
|---|---|
| Glasplatten/Stahl: | Bestimmung des Glanzwertes (20°/60°) nach DIN 67530 |
| Glasplatten: | Bestimmung der Dämpfungsdauer nach DIN 53 157 |
| Stahl-/Aluminium-/Zinkblech: | Prüfung der Haftung nach EN ISO 2409 |
| Stahlblech: | Prüfung der Erichsentiefung nach DIN ISO 1520 |
| Stahlblech: | Prüfung der Chemikalienbeständigkeit (Aceton/-Xylol, 1 min/5 min Belastung) |
| Unibond WH/60/OC: | Prüfung der Wasserbeständigkeit nach 16 Stunden Raumtemperaturtrocknung |
| Glanz: | nach DIN 67 530 |
| Blasenbildung: | nach DIN 53 209 |
| Haftung: | nach EN ISO 2409 |

**Beispiel 7:**

Weißer Zweikomponenten-Decklack für die Großfahrzeuglackierung auf Basis des Polyesterpolyols I.

Komponente 1

Es wurde in einem handelsüblichen Dissolver (15 Min. bei einer Randgeschwindigkeit von 10 m/s) ein Mahlgut nach folgender Formulierung hergestellt:

38,91 Gew.-Teile Polyesterpolyol I
1,09 Gew.-Teile Surfynol® 104 BC
0,91 Gew.-Teile Baysilone® VP AI 3468, 10%ig in Butylglykol
6,98 Gew.-Teile Borchigen® SN 95
0,13 Gew.-Teile Borchigel® PW 25
29,02 Gew.-Teile Titandioxid Tronox® R-KB-4

Das Mahlgut wurde mit Siliquarzperlen vom Durchmesser 2 mm in einem Skandex-Schüttler ca. 60 Minuten dispergiert. Danach wurde das Mahlgut durch Sieben von den Glasperlen abgetrennt. Danach ist die Komponente 1 (formulierte Polyolkomponente) für die weitere Verwendung einsatzbereit. Zur Herstellung eines Zweikomponentenlackes wurde die Komponente 1 mit dem Polyisocyanathärter (Komponente 2) gemischt. Die Komponente 2 enthielt folgende Bestandteile:

Komponente 2

15,53 Gew.-Teile Bayhydur® VP LS 2319

3,88 Gew.-Teile Methoxybutylacetat

100,00 Gew.-Teile

Die Mischung der Komponenten 1 und 2 erfolgt innerhalb von 2 Minuten bei einer Rührerdrehzahl von 2000 U/min. Danach wurde der fertige Zweikomponentenlack mit entionisiertem Wasser auf eine Spritzviskosität von ca. 25 s (Auslaufzeit aus DIN-4 mm-Becher bei 23°C) eingestellt. Der so eingestellte Weißlack wurde mittels einer handelsüblichen Spritzpistole des Tpys Sata Jet HVLP NR 2000 (1,3 mm Düse, Druck 3,5 bis 4 bar) der Firma Sata Farbspritztechnik GmbH, Kornwestheim, DE auf Beschichtete Rundloch-Bleche, Maße: 150 x 300 mm, kommerziell erhältlich unter Artikel-Nr. 17542H11ME der Fa. Heinz Zanders, Liebigstraße 22, 42719 Solingen, DE appliziert. Die Aushärtung erfolgte bei 30 Min. 60°C und anschließend bei Raumtemperatur.

**Beispiele 8 und 9:**

Analog Beispiel 6 wurden weiße Zweikomponenten-Decklacke für die allgemeine Industrielackierung auf Basis der Polyesterpolyole II (Beispiel 2) und III (Beispiel 3) hergestellt und appliziert.

**Beispiele 10 und 11:**

Analog Beispiel 7 wurden weiße Zweikomponenten-Decklacke für die Großfahrzeuglackierung auf Basis der Polyesterpolyole II (Beispiel 2) und III (Beispiel 3) hergestellt und appliziert.

**Vergleichsbeispiel 12:**

Analog Beispiel 6 wurde ein weißer Zweikomponenten-Decklack für die allgemeine Industrielackierung auf Basis des Polyesterpolyols IV hergestellt und appliziert.

**Vergleichsbeispiel 13:**

Analog Beispiel 7 wurde ein weißer Zweikomponenten-Decklack für die Großfahrzeuglackierung auf Basis des Polyesterpolyols V hergestellt und appliziert.

**Prüfergebnisse von wässrigen Zweikomponenten-Polyurethanlacken auf Basis der Polyesterpolyole I bis IV (allgemeine Industrielackierung):**

Tabelle 1: Prüfergebnisse der lacktechnischen Prüfungen

| **Lack aus Beispiel Nr.** | | **6** | **8** | **9** | **12** |
|---|---|---|---|---|---|
| Potlife, h | | 5 | 6 | 6 | 6 |
| Trocknung, T1 / T3 in h | | 1 / 5 | 1,5 / 5,5 | 1 / 5 | 1,5 / 5,5 |
| Pendeldämpfung, s | nach 1 d<br>7 d<br>14 d | 90<br>96<br>98 | 87<br>92<br>96 | 98<br>104<br>107 | 110<br>115<br>118 |
| Erichsendehnung, mm | n.14 d | 8,2 | 8,5 | 8,3 | 7,4 |
| Glanz 20° / 60° | | 89 / 96 | 90 / 96 | 90 / 97 | 89 / 96 |
| Beständigkeit[1)] gegen<br>Xylol / Aceton<br>5 min Einwirkdauer | 1 d<br>7 d<br>14 d | 2/2<br>1 / 2<br>0 / 2 | 2/2<br>1 / 2<br>0 / 1 | 1/2<br>1 / 2<br>0 / 1 | 2/2<br>1 / 2<br>1 / 2 |
| Beständigkeit[2)] | nach 1 d | 80/92 | 81 / 93 | 83/94 | 70/93 |

(fortgesetzt)

| Lack aus Beispiel Nr. | | 6 | 8 | 9 | 12 |
|---|---|---|---|---|---|
| gegen Wasser | 7 d<br>14 d | 65 / 89<br>46 / 74 | 69 / 90<br>57 / 78 | 72 / 91<br>61 / 82 | 11/28<br>------ |
| Haftung[1)] auf Stahl | nach 1 d<br>7d<br>14d | 2<br>1<br>1 | 2<br>1<br>1 | 2<br>1<br>1 | 2<br>2<br>1 |
| Haftung[1)] auf Zink nach | 1 d<br>7d<br>14 d | 2<br>2<br>2 | 2<br>1<br>1 | 2<br>1<br>1 | 1<br>2<br>1 |
| Haftung[1)] auf Alu nach | 1 d<br>7d<br>14d | 2<br>2<br>2 | 2<br>2<br>2 | 2<br>2<br>2 | 2<br>2<br>2 |
| Haftung[1)] auf Unibond n. | 1 d<br>7d<br>14 d | 1<br>1<br>2 | 1<br>1<br>1 | 1<br>1<br>1 | 2<br>5<br>---- |
| [1)]0 = bester Wert (ohne Befund), 5 = schlechtester Wert (Film völlig aufgelöst bzw. keine Haftung mehr)<br>[2)]Wasserlagerungstest: Bestimmung des Glanzes nach Tagen, je höher der Wert, desto besser die Wasserbeständigkeit | | | | | |

**Prüfergebnisse von wässrigen Zweikomponenten-Polyurethanlacken auf Basis der Polyesterpolyole I bis III und V (Großfahrzeuglackierung):**

Tabelle 2: Prüfergebnisse der lacktechnischen Prüfungen

| Lack aus Beispiel Nr. | | 7 | 10 | 11 | 13 |
|---|---|---|---|---|---|
| Potlife, h | | 6 | 6 | 6 | 6 |
| Trocknung, T1 / T3 in h | | 1,5 / 6 | 2,5 / 7 | 2 / 6,5 | 3 / 8 |
| Pendeldämpfung, s | nach<br>1 d<br>4 d<br>7 d | <br>102<br>155<br>159 | <br>82<br>121<br>123 | <br>91<br>130<br>134 | <br>71<br>93<br>96 |
| Erichsendehnung, mm nach | 14 d | 9,6 | 10 | 10 | 10 |
| Glanz 20° | | 96 | 95 | 95 | 87 |
| Haze | | 20 | 23 | 24 | 28 |
| Beständigkeit[1)] gegen Xylol 5 min. Einwirkdauer | nach 1 d<br>4 d<br>7 d | 1<br>0<br>0 | 1<br>1<br>0 | 1<br>0<br>0 | 2<br>2<br>1 |
| Beständigkeit[1)] gegen MPA 5 min. Einwirkdauer | nach 1 d<br>4 d<br>7 d | 1<br>0<br>0 | 1<br>1<br>0 | 1<br>0<br>0 | 2<br>2<br>1 |
| Beständigkeit[1)] gegen Superbenzin 5 min. Einwirkdauer | nach 1 d<br>4 d<br>7 d | 1<br>0<br>0 | 1<br>0<br>0 | 1<br>0<br>0 | 2<br>2<br>0 |

(fortgesetzt)

| Lack aus Beispiel Nr. | | 7 | 10 | 11 | 13 |
|---|---|---|---|---|---|
| Beständigkeit[1)] | nach 1d | 1 | 2 | 1 | 3 |
| gegen Wasser | 4 d | 1 | 1 | 1 | 3 |
| 1 h Einwirkdauer | 7 d | 1 | 1 | 1 | 2 |
| [1)]0 = bester Wert (ohne Befund), 5 = schlechtester Wert (Film völlig aufgelöst bzw. keine Haftung mehr) | | | | | |

Lagerbeständigkeit der Polyesterdispersionen I bis V

Die Polyesterdispersionen I bis V wurden bei 40°C in einem handelsüblichen Wärmeschrank gelagert und täglich begutachtet, ob sich sichtbare Veränderungen ergeben haben (z.B. Bildung zweier Phasen oder eines Bodensatzes). In Abständen von 7 Tagen wurden sowohl die Viskosität als auch die Säurezahl der Dispersionen ermittelt. Die Vergleichsdispersion IV zeigte nach 94 Tagen einen beginnenden Bodensatz und bildete nach 97 Tagen zwei Phasen aus Serum und vollständigem Bodensatz, bei der Vergleichsdispersion V geschah das nach 112 und 117 Tagen. Die Dispersionen, enthaltend die erfindungsgemäßen Polyesterpolyole, wiesen nach 157 Tagen noch keinen Bodensatz auf. Die Vergleichsdispersionen IV und V zeigten innerhalb von 94 bzw. 112 Tagen einen starken Viskositätsabfall und einen deutlichen Anstieg der Säurezahl von 13,8 auf 17,4 mg KOH/g bzw. von 16,7 auf 20,8 mg KOH/g. Dagegen waren Viskositätsabfall und Anstieg der Säurezahl der Dispersionen, enthaltend die erfindungsgemäßen Polyesterpolyole, innerhalb von 157 Tagen wesentlich geringer:

Polyesterdispersion I: Anstieg von 16,9 auf 18,8 mg KOH/g
Polyesterdispersion II: Anstieg von 18,3 auf 20,2 mg KOH/g
Polyesterdispersion III: Anstieg von 19,1 auf 21,2 mg KOH/g

Diskussion der Versuchsergebnisse:

Mit den Polyesterpolyolen der Beispiele 1 bis 5 lassen sich in Kombination mit wasserverdünnbaren aliphatischen Polyisocyanaten wässrige Zweikomponenten-Polyurethanlacke herstellen, die eine ausreichend lange Verarbeitungszeit besitzen, nach Applikation auf ein Substrat schnell trocknen und glänzende bis hoch glänzende Lackfilme liefern. Dabei haben die Lacke auf Basis der erfindungsgemäßen Polyesterpolyole I bis III durchweg eine schnellere Trocknung, eine höhere Härte, einen höheren Glanz und eine bessere Lösemittelbeständigkeit als die Lacke auf Basis der Vergleichspolyester IV und V. Von entscheidender Bedeutung ist jedoch die wesentlich bessere Wasserbeständigkeit der Lackfilme auf Basis der erfindungsgemäßen Polyesterpolyole im Vergleich zu den Lacken auf Basis der Vergleichspolyester sowie die deutlich bessere Lagerstabilität der Dispersionen I bis III, enthaltend die erfindungsgemäßen Polyesterpolyole, im Vergleich zu den Polyesterdispersionen IV und V.

## Patentansprüche

**1.** Polyesterpolyole,

- die Struktureinheiten der allgemeinen Formel (I) enthalten,

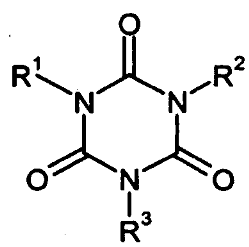

(I)

in welcher

$R^1$, $R^2$, $R^3$ unabhängig voneinander gleich oder verschieden sind und für organische gegebenenfalls Heteroatom-enthaltende Reste stehen, die eine oder mehrere der folgenden Struktureinheiten aufweisen:

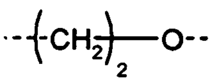 , 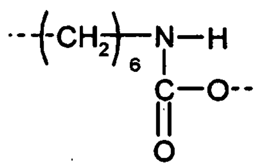 , 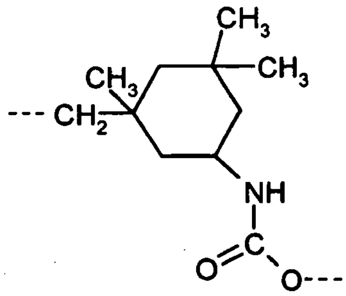 ,

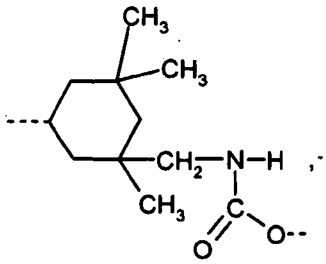 , 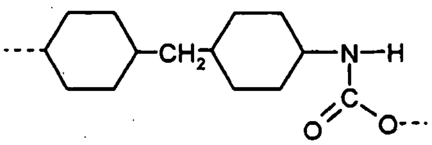 , 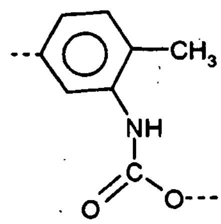

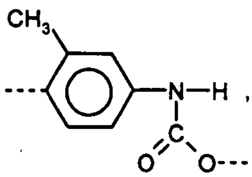 , 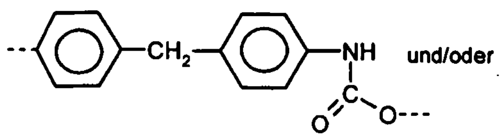 und/oder 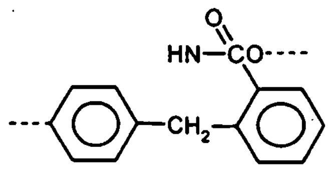

und wenigstens eine Struktureinheit ausgewählt aus der Gruppe bestehend aus Struktureinheiten der allgemeinen Formel (II)

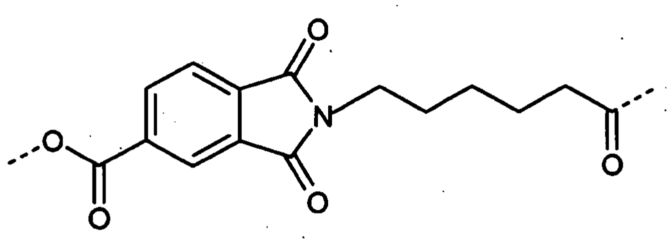

(II)

• und Struktureinheiten der allgemeinen Formel (III)

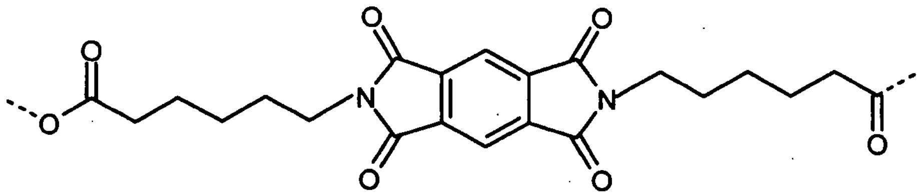 (III).

enthalten,

**2.** Polyesterpolyole,

• die Struktureinheiten der allgemeinen Formel (I) enthalten,

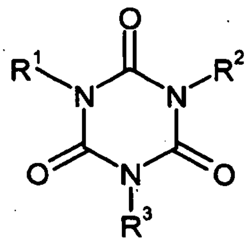 (I)

in welcher
$R^1$, $R^2$, $R^3$ unabhängig voneinander gleich oder verschieden sind und für organische gegebenenfalls Heteroatom-enthaltende Reste stehen, die eine oder mehrere der folgenden Struktureinheiten aufweisen:

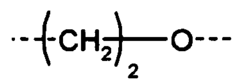 , 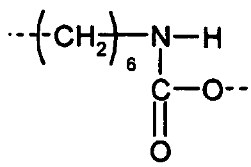 , 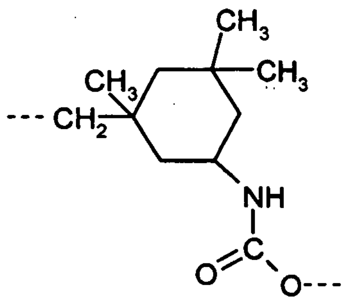 ,

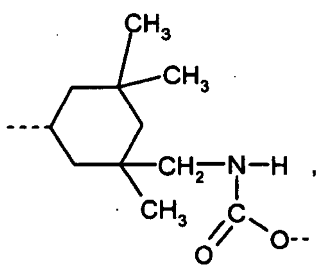 , 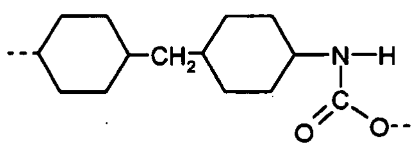 , 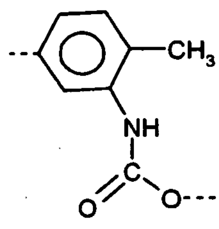

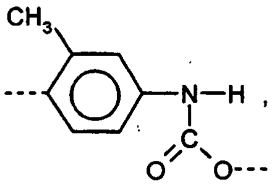 , 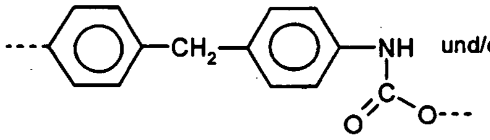 und/oder 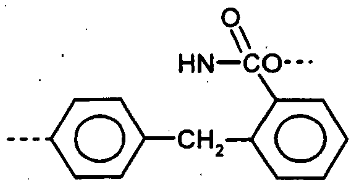

und die als Endgruppen
wenigstens eine Struktureinheit ausgewählt aus der Gruppe bestehend aus

- Struktureinheiten der allgemeinen Formel (IV)

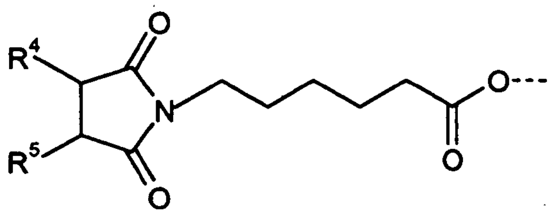

(IV)

- und Struktureinheiten der allgemeinen Formel (V)

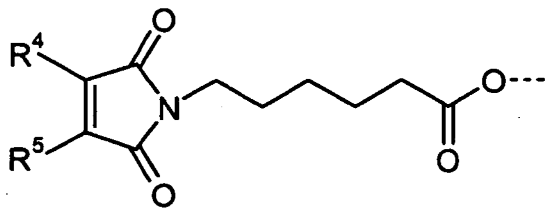

(V)

enthalten,
in welchen
$R^4$, $R^5$ unabhängig gleich oder verschieden sind und

- für Wasserstoff, Halogen, gegebenenfalls substituierte $C_1$-$C_{18}$-Alkyl-, $C_2$-$C_{18}$-Alkenyl, $C_2$-$C_{18}$-Alkinyl, $C_3$-$C_{12}$-Cycloalkyl-, $C_3$-$C_{12}$-Heterocycloalkyl-, $C_6$-$C_{24}$-Aryl-, $C_6$-$C_{24}$-Heteroaryl-, $C_1$-$C_{18}$-Alkoxy-, $C_1$-$C_{18}$-Alkylthio-, $C_1$-$C_{18}$-Alkylamino-Reste stehen

oder

- mit dem verbindenden C-Atom des $C_4$N-Fünfringes ein $C_3$-$C_{12}$-Cycloalkyl- oder $C_2$-$C_{13}$-Heterocycloalkylrest bilden, der gegebenenfalls Sauerstoff, Stickstoff und/oder Schwefel enthält

oder

- beide zusammen mit den verbindenden C-Atomen des $C_4$N-Fünfringes ein annelliertes cyclisches oder polycyclisches Ringsystem bilden, welches gesättigt, ungesättigt, teilweise oder vollständig aromatisch ist, gegebenenfalls substituiert ist und gegebenenfalls Sauerstoff, Stickstoff und/oder Schwefel enthält.

**3.** Polesterpolyole gemäß Anspruch 1 oder 2, **dadurch gekennzeichnet, dass** die Polyesterpolyole freie Hydroxyl- und Carboxylgruppen aufweisen.

**4.** Polyesterpolyole gemäß Anspruch 1 oder 2, **dadurch gekennzeichnet, dass** die Hydroxylzahl 10 bis 400 mg KOH/g beträgt.

**5.** Polyesterpolyole gemäß Anspruch 1 oder 2, **dadurch gekennzeichnet, dass** die Säurezahl 5 bis 100 mg KOH/g beträgt.

**6.** Verfahren zur Herstellung der Polyesterpolyole gemäß Anspruch 1 durch

(I) Umsetzung eines Anhydrids der Trimellitsäure und/oder der Pyromellitsäure mit einem cyclischen Lactam (B),
(II) Aufbau eines hydroxyfunktionellen Polyesters durch Zugabe von

- Trishydroxyethylisocyanurat (D1), und
- gegebenenfalls einer Alkoholkomponente (C) enthaltend
- ein oder mehrere aliphatische oder cycloaliphatische $C_3$-$C_{10}$-Polyole mit einer Funktionalität größer 2 (C1),
- ein oder mehrere aliphatische oder cycloaliphatische $C_2$-$C_{18}$-Diole (C2) und
- ein oder mehrere aliphatische, cycloaliphatische oder araliphatische monofunktionelle $C_1$-$C_{18}$-Alkohole (C3),

sowie gegebenenfalls Zugabe einer Säurekomponente (A) enthaltend

- ein oder mehrere difunktionelle Carbonsäuren oder deren Anhydride (A1) und/oder
- ein oder mehrere polyfunktionelle Carbonsäuren oder deren Anhydride (A2) und
- ein oder mehrere Monocarbonsäuren (A3),

sowie gegebenenfalls Zugabe einer isocyanurathaltigen Isocyanatkomponente (D2).

**7.** Verfahren zur Herstellung der Polyesterpolyole gemäß Anspruch 2 enthaltend die Schritte

(I) Umsetzung eines Anhydrids einer difunktionellen Carbonsäuren (A1) mit einem cyclischen Lactam (B),
(II) Aufbau eines hydroxyfunktionellen Polyesters durch Zugabe von

- Trishydroxyethylisocyanurat (D1) und
- gegebenenfalls einer Alkoholkomponente (C) enthaltend
- ein oder mehrere aliphatische oder cycloaliphatische $C_3$-$C_{10}$-Polyole mit einer Funktionalität größer 2 (C1),
- ein oder mehrere aliphatische oder cycloaliphatische $C_2$-$C_{18}$-Diole (C2) und
- ein oder mehrere aliphatische, cycloaliphatische oder araliphatische monofunktionelle $C_1$-$C_{18}$-Alkohole (C3),

sowie gegebenenfalls durch Zugabe einer Säurekomponente (A) enthaltend

- ein oder mehrer difunktionelle Carbonsäuren oder deren Anhydride (A1) und/oder
- ein oder mehrere polyfunktionelle Carbonsäuren oder deren Anhydride (A2) und
- ein oder mehrerer Monocarbonsäuren (A3).

sowie gegebenenfalls durch Zugabe einer isocyanurathaltigen Isocyanatkomponente (D2).

**8.** Verfahren gemäß der Ansprüche 6 oder 7, **dadurch gekennzeichnet, dass** in einer dritten Stufe die Umsetzung des hydroxyfunktionellen Polyesters aus Stufe (II) mit einem Carbonsäureanhydrid, ausgewählt aus der Gruppe der 2fach-funktionellen Carbonsäuren (A1) und/oder 3fach-funktionellen Carbonsäuren (A2'), unter Ringöffnung und Halbesterbildung erfolgt.

**9.** Lösungen oder Dispersionen, enthaltend Polyesterpolyole gemäß Anspruch 1 und/oder 2.

**10.** Beschichtungsmittel, enthaltend Polyesterpolyole gemäß Anspruch 1 und/oder 2.

**11.** Beschichtungsmittel gemäß Anspruch 10, **dadurch gekennzeichnet, dass** sie wasserhaltig sind.

**12.** Beschichtungsmittel gemäß Anspruch 10, **dadurch gekennzeichnet, dass** sie lösemittelhaltig sind.

**13.** Verfahren zur Herstellung von Beschichtungsmitteln gemäß Anspruch 10, **dadurch gekennzeichnet, dass** in ein oder mehrere Polyesterpolyole gemäß Anspruch 1 und/oder 2 oder in Lösungen oder Dispersionen nach Anspruch

9 ein oder mehrere gegebenenfalls blockierte Polyisocyanate, sowie gegebenenfalls weitere Bindemittel und gegebenenfalls Hilfs- und Zusatzstoffe eingerührt oder einemulgiert werden.

**14.** Verwendung von Beschichtungsmitteln gemäß Anspruch 10 zur Lackierung und/oder Verklebung von Substraten.

**15.** Substrate beschichtet mit Beschichtungsmitteln nach Anspruch 10.

## Claims

**1.** Polyesterpolyols containing

• structural units of general formula (I):

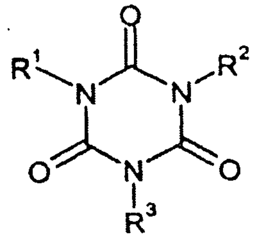

(I)

in which
$R^1$, $R^2$ and $R^3$ independently of one another are identical or different and are organic, optionally heteroatom-containing radicals having one or more of the following structural units:

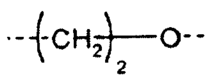 , 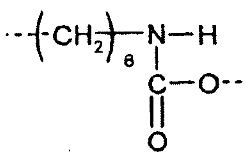 , 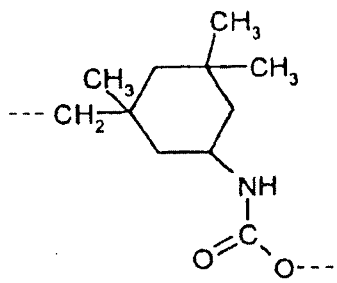 ,

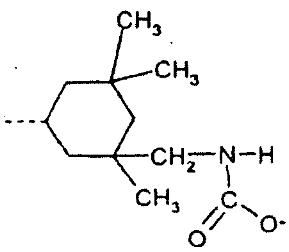 , 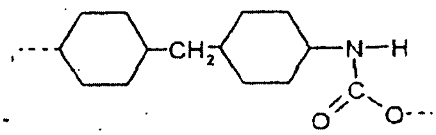 , 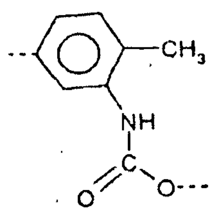

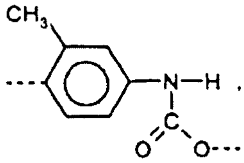, 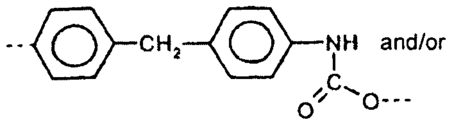 and/or 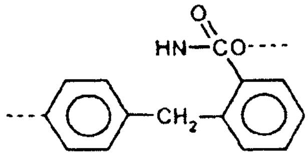

and at least one structural unit selected from the group comprising

• structural units of general formula (II):

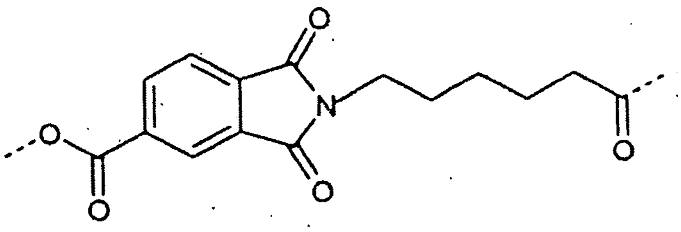 (II)

• and structural units of general formula (III):

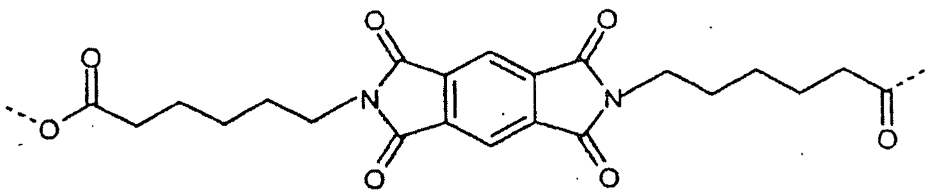 (III).

**2.** Polyesterpolyols containing

• structural units of general formula (I):

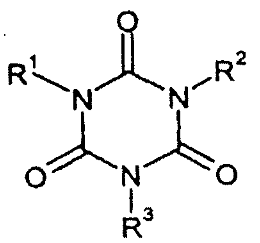 (I)

in which

$R^1$, $R^2$ and $R^3$ independently of one another are identical or different and are organic, optionally heteroatom-containing radicals having one or more of the following structural units:

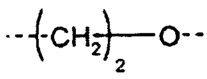 , 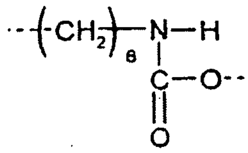 , 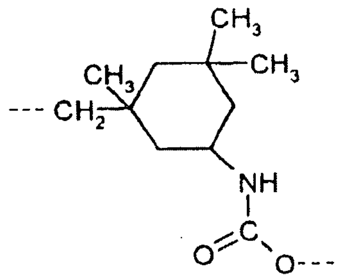 ,

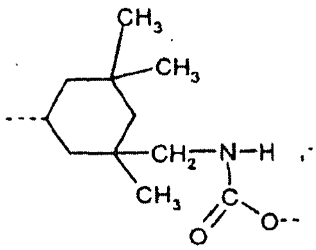 , 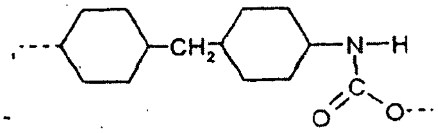 , 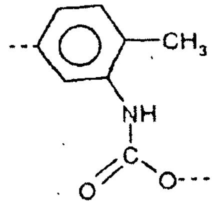

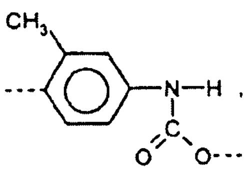 , 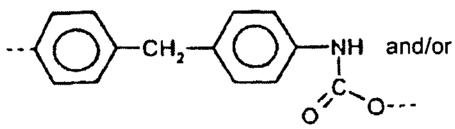 and/or 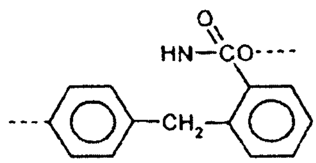

and containing, as end groups, at least one structural unit selected from the group comprising

• structural units of general formula (IV):

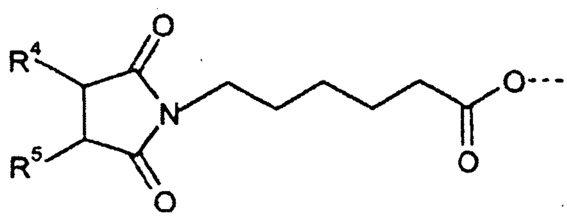 (IV)

• and structural units of general formula (V):

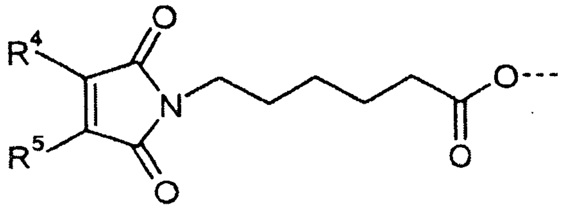

(V)

in which
$R^4$ and $R^5$ independently are identical or different and

• are hydrogen, halogen or optionally substituted $C_1$-$C_{18}$-alkyl, $C_2$-$C_{18}$-alkenyl, $C_2$-$C_{18}$-alkynyl, $C_3$-$C_{12}$-cycloalkyl, $C_3$-$C_{12}$-heterocycloalkyl, $C_6$-$C_{24}$-aryl, $C_6$-$C_{24}$-heteroaryl, $C_1$-$C_{18}$-alkoxy, $C_1$-$C_{18}$-alkylthio or $C_1$-$C_{18}$-alkylamino radicals,

or

• form, together with the bonding C atom of the $C_4N$ five-membered ring, a $C_3$-$C_{12}$-cycloalkyl or $C_3$-$C_{12}$-heterocycloalkyl radical which optionally contains oxygen, nitrogen and/or sulfur,

or

• both form, together with the bonding C atoms of the $C_4N$ five-membered ring, a fused cyclic or polycyclic ring system which is saturated, unsaturated or partially or completely aromatic, is optionally substituted and optionally contains oxygen, nitrogen and/or sulfur.

**3.** Polyesterpolyols according to Claim 1 or 2, **characterized in that** they have free hydroxyl and carboxyl groups.

**4.** Polyesterpolyols according to Claim 1 or 2, **characterized in that** the hydroxyl number is 10 to 400 mg KOH/g.

**5.** Polyesterpolyols according to Claim 1 or 2, **characterized in that** the acid number is 5 to 100 mg KOH/g.

**6.** Process for the preparation of the polyesterpolyols according to Claim 1 by

(I) reacting trimellitic and/or pyromellitic anhydride with a cyclic lactam (B),
(II) synthesizing a hydroxy-functional polyester by adding

- trishydroxyethyl isocyanurate (D1) and
- optionally an alcohol component (C) containing
- one or more aliphatic or cycloaliphatic $C_3$-$C_{10}$ polyols with a functionality greater than 2 (C1),
- one or more aliphatic or cycloaliphatic $C_2$-$C_{18}$ diols (C2) and
- one or more aliphatic, cycloaliphatic or araliphatic monofunctional $C_1$-$C_{18}$ alcohols (C3),

and optionally adding an acid component (A) containing

- one or more difunctional carboxylic acids or their anhydrides (A1) and/or
- one or more polyfunctional carboxylic acids or their anhydrides (A2) and
- one or more monocarboxylic acids (A3),

and optionally adding an isocyanurate-containing isocyanate component (D2).

**7.** Process for the preparation of the polyesterpolyols according to Claim 2 comprising the following steps:

(I) reaction of an anhydride of a difunctional carboxylic acid (A1) with a cyclic lactam (B),
(II) synthesis of a hydroxy-functional polyester by adding

- trishydroxyethyl isocyanurate (D1) and
- optionally an alcohol component (C) containing
- one or more aliphatic or cycloaliphatic $C_3$-$C_{10}$ polyols with a functionality greater than 2 (C1),
- one or more aliphatic or cycloaliphatic $C_2$-$C_{18}$ diols (C2) and
- one or more aliphatic, cycloaliphatic or araliphatic monofunctional $C_1$-$C_{18}$ alcohols (C3),

and optionally addition of an acid component (A) containing

- one or more difunctional carboxylic acids or their anhydrides (A1) and/or
- one or more polyfunctional carboxylic acids or their anhydrides (A2) and
- one or more monocarboxylic acids (A3),

and optionally addition of an isocyanurate-containing isocyanate component (D2).

**8.** Process according to Claim 6 or 7, **characterized in that,** in a third stage, the hydroxy-functional polyester from stage (II) is reacted with an anhydride of a carboxylic acid selected from the group comprising difunctional carboxylic acids (A1) and/or trifunctional carboxylic acids (A2'), with ring opening and hemiester formation.

**9.** Solutions or dispersions containing polyesterpolyols according to Claim 1 and/or 2.

**10.** Coating agents containing polyesterpolyols according to Claim 1 and/or 2.

**11.** Coating agents according to Claim 10, **characterized in that** they contain water.

**12.** Coating agents according to Claim 10, **characterized in that** they contain solvent.

**13.** Process for the production of coating agents according to Claim 10, **characterized in that** one or more optionally blocked polyisocyanates, and optionally other binders and optionally auxiliary substances and additives, are incorporated into one or more polyesterpolyols according to Claim 1 and/or 2, or into solutions or dispersions according to Claim 9, by stirring or emulsification.

**14.** Use of coating agents according to Claim 10 for lacquering and/or glueing substrates.

**15.** Substrates coated with coating agents according to Claim 10.

## Revendications

**1.** Polyesterpolyols,

• qui contiennent des unités de structure de la formule générale (I)

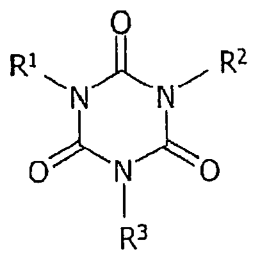

(I)

dans laquelle
$R^1$, $R^2$, $R^3$ sont indépendamment les uns des autres identiques ou différents et représentent des restes organiques contenant éventuellement des hétéroatomes, lesquels présentent une ou plusieurs des unités de structure suivantes :

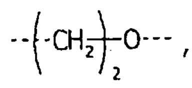 , 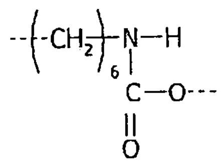 , 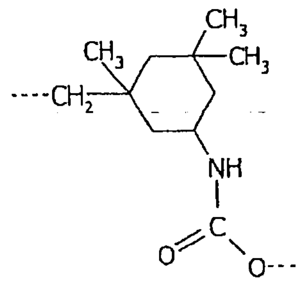 ,

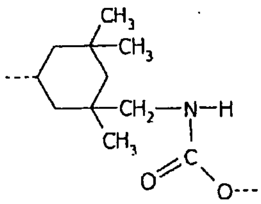 , 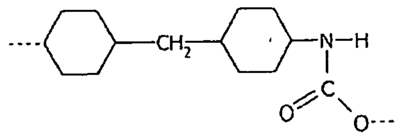 , 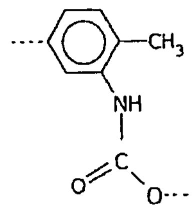 ,

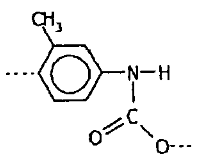 , 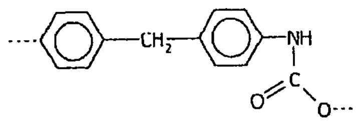 et/ou 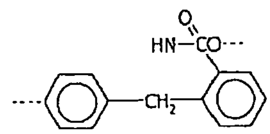

et au moins une unité de structure choisie dans le groupe constitué des unités de structure de la formule générale (II)

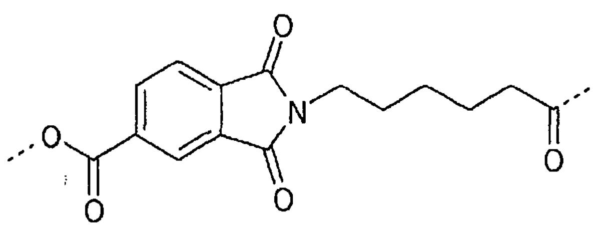 (II)

• et contiennent des unités de structure de la formule générale (III)

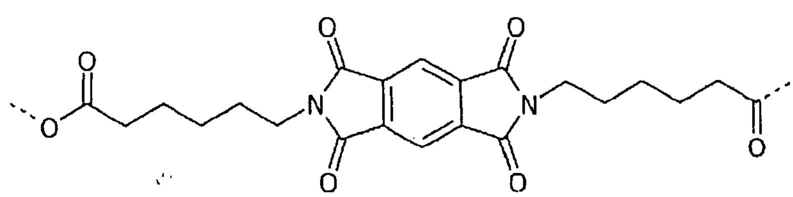 (III)

**2.** Polyesterpolyols

• qui contiennent des unités de structure de la formule générale (I),

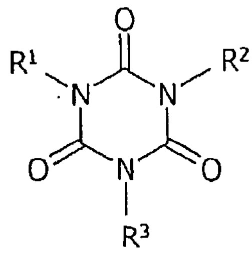

(I)

dans laquelle
$R^1$, $R^2$, $R^3$ sont indépendamment les uns des autres identiques ou différents et représentent des restes organiques contenant éventuellement des hétéroatomes, lesquels présentent une ou plusieurs des unités de structure suivantes :

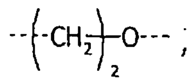 ; 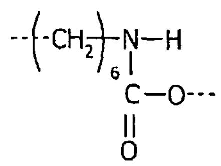 , 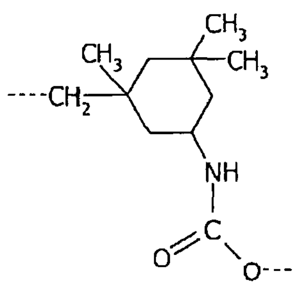

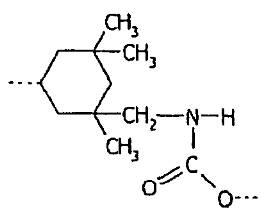 , 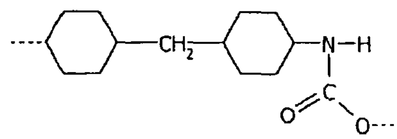 , 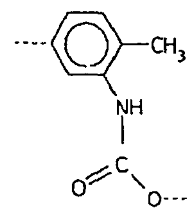 ,

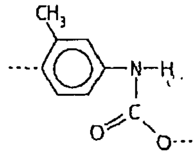 , 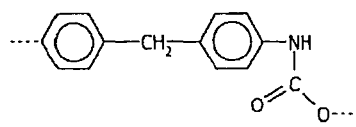 et/ou 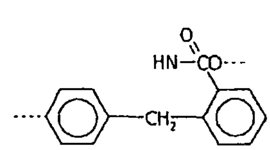

et qui contiennent comme groupes de terminaison au moins une unité de structure choisie dans le groupe constitué

• des unités de structure de la formule générale (IV)

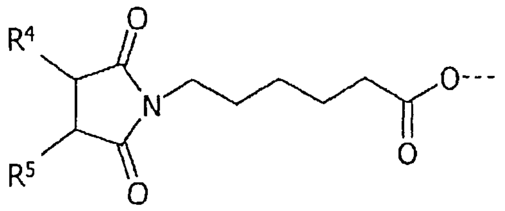

(IV)

• et des unités de structure de la formule générale (V)

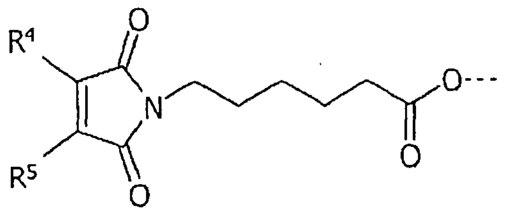

(V)

dans lesquelles $R^4$, $R^5$ sont indépendamment les uns des autres identiques ou différents et

• représentent l'hydrogène, un halogène, un groupe $C_1$-$C_{18}$-alkyle, $C_2$-$C_{18}$-alcényle, $C_2$-$C_{18}$-alcynyle, $C_3$-$C_{12}$-cycloalkyle, $C_3$-$C_{12}$-hétérocycloalkyle, $C_6$-$C_{24}$-aryle, $C_6$-$C_{24}$-hétéroaryle, $C_1$-$C_{18}$-alcoxy, $C_1$-$C_{18}$-alkylthio, $C_1$-$C_{18}$-alkylamino éventuellement substitué

ou

• forment avec l'atome C de liaison du noyau à cinq éléments $C_4N$ un reste $C_3$-$C_{12}$-cycloalkyle ou $C_2$-$C_{13}$-hétérocycloalkyle, lequel contient éventuellement de l'oxygène, de l'azote et/ou du soufre

ou

• forment ensemble tous les deux avec les atomes C de liaison du noyau à cinq éléments $C_4N$ un système de noyau cyclique ou polycyclique condensé, lequel est saturé, insaturé, partiellement ou totalement aromatique, est éventuellement substitué et contient éventuellement de l'oxygène, de l'azote et/ou du soufre.

**3.** Polyesterpolyols selon la revendication 1 ou 2, **caractérisés en ce que** les polyesterpolyols présentent des groupes hydroxyle et carboxyle libres.

**4.** Polyesterpolyols selon la revendication 1 ou 2, **caractérisés en ce que** l'indice hydroxyle est de 10 à 400 mg de KOH/g.

**5.** Polyesterpolyols selon la revendication 1 ou 2, **caractérisés en ce que** l'indice acide est de 5 à 100 mg de KOH/g.

**6.** Procédé pour la préparation des polyesterpolyols selon la revendication 1 par

(I) réaction d'un anhydride de l'acide trimellitique et/ou de l'acide pyromellitique avec un lactame cyclique (B),
(II) constitution d'un polyester hydroxyfonctionnel par addition

- d'isocyanurate de trishydroxyéthyle (D1) et
- éventuellement d'un constituant alcool (C) contenant
- un ou plusieurs polyols en $C_3$-$C_{10}$ aliphatiques ou cycloaliphatiques avec une fonctionnalité supérieure à 2 (C1),
- un ou plusieurs diols en $C_2$-$C_{18}$ aliphatiques ou cycloaliphatiques (C2) et
- un ou plusieurs alcools en $C_1$-$C_{18}$ monofonctionnels aliphatiques, cycloaliphatiques ou araliphatiques (C3),

ainsi qu'éventuellement par addition d'un constituant acide (A) contenant

- un ou plusieurs acides carboxyliques difonctionnels ou leurs anhydrides (A1) et/ou

- un ou plusieurs acides carboxyliques polyfonctionnels ou leurs anhydrides (A2) et
- un ou plusieurs acides monocarboxyliques (A3),

ainsi qu'éventuellement par addition d'un constituant isocyanate contenant un isocyanurate (D2).

**7.** Procédé pour la préparation des polyesterpolyols selon la revendication 2 contenant les étapes

(I) de réaction d'un anhydride d'un acide carboxylique difonctionnel (A1) avec un lactame cyclique (B),
(II) de constitution d'un polyester hydroxyfonctionnel par addition

- d'isocyanurate de trishydroxyéthyle (D1) et
- éventuellement d'un constituant alcool (C) contenant
- un ou plusieurs polyols en $C_3$-$C_{10}$ aliphatiques ou cycloaliphatiques avec une fonctionnalité supérieure à 2 (C1),
- un ou plusieurs diols en $C_2$-$C_{18}$ aliphatiques ou cycloaliphatiques (C2) et
- un ou plusieurs alcools en $C_1$-$C_{18}$ monofonctionnels aliphatiques, cycloaliphatiques ou araliphatiques (C3),

ainsi qu'éventuellement par addition d'un constituant acide (A) contenant

- un ou plusieurs acides carboxyliques difonctionnels ou leurs anhydrides (A1) et/ou
- un ou plusieurs acides carboxyliques polyfonctionnels ou leurs anhydrides (A2) et
- un ou plusieurs acides monocarboxyliques (A3),

ainsi qu'éventuellement par addition d'un constituant isocyanate contenant un isocyanurate (D2).

**8.** Procédé selon la revendication 6 ou 7, **caractérisé en ce que** la réaction du polyester hydroxyfonctionnel de l'étape (II) avec un anhydride d'acide carboxylique choisi dans le groupe constitué des acides carboxyliques bifonctionnels (A1) et/ou des acides carboxyliques trifonctionnels (A2') par ouverture du noyau et formation de semi-ester est réalisée dans une troisième étape.

**9.** Solutions ou dispersions contenant des polyesterpolyols selon la revendication 1 et/ou 2.

**10.** Agents de revêtement contenant des polyesterpolyols selon la revendication 1 et/ou 2.

**11.** Agents de revêtement selon la revendication 10, **caractérisés en ce qu'**ils contiennent de l'eau.

**12.** Agents de revêtement selon la revendication 10, **caractérisés en ce qu'**ils contiennent un solvant.

**13.** Procédé pour la préparation d'agents de revêtement selon la revendication 10, **caractérisé en ce que** l'on agite ou l'on émulsionne dans un ou plusieurs polyesters selon la revendication 1 et/ou 2 ou dans des solutions ou des dispersions selon la revendication 9 un ou plusieurs polyisocyanates éventuellement bloqués ainsi qu'éventuellement d'autres liants et éventuellement des auxiliaires et additifs.

**14.** Utilisation d'agents de revêtement selon la revendication 10 pour le laquage et/ou le collage de substrats.

**15.** Substrats revêtus d'agents de revêtement selon la revendication 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0358979 A
- EP 0469389 A
- EP 0496205 A
- EP 0537568 A
- EP 0583728 A
- EP 0654053 A
- DE 4135571 A
- EP 0365775 A
- EP 0363723 A
- EP 0521926 A
- EP 0521927 A
- DE 19538061 A
- DE 4226242 A
- DE 3817614 A
- DE 3332031 A
- DE 3213257 A
- US 3426098 A
- EP 443138 A
- EP 510438 A
- EP 206059 A
- EP 540985 A
- US P5200489 P
- EP 0959087 A
- EP 959115 A
- EP 1065228 A
- EP 0703255 A

### In der Beschreibung aufgeführte Nicht-Patentliteratur

- Ullmanns Encyclopädie der Technischen Chemie. Verlag Chemie Weinheim, 1980, vol. 19, 61 ff
- **von H. Wagner ; H. F. Sarx.** Lackkunstharze. Carl Hanser Verlag, 1971, 86-152
- *J. Prakt. Chem.,* 1994, vol. 336, 185-200
- **Houben-Weyl.** Methoden der organischen Chemie, Erweiterungs- und Folgebände. 1987, vol. E 20, 259-262